(19) **Europäisches Patentamt / European Patent Office / Office européen des brevets**

(11) **EP 4 414 862 B1**

(12) **EUROPEAN PATENT SPECIFICATION**

(45) Date of publication and mention
of the grant of the patent:
**22.04.2026 Bulletin 2026/17**

(21) Application number: **22886050.8**

(22) Date of filing: **27.10.2022**

(51) International Patent Classification (IPC):
*G06V 20/64* (2022.01)    *G06V 10/82* (2022.01)
*G06V 20/58* (2022.01)    *G06V 10/72* (2022.01)
*G06V 40/16* (2022.01)    *G06V 10/764* (2022.01)
*G06V 10/774* (2022.01)    *G06N 3/045* (2023.01)
*G06N 3/08* (2023.01)    *G06F 18/214* (2023.01)
*G06F 21/32* (2013.01)

(52) Cooperative Patent Classification (CPC):
**G06F 18/214; G06F 21/32; G06N 3/045;
G06N 3/08; G06V 10/72; G06V 10/764;
G06V 10/774; G06V 10/82; G06V 20/58;
G06V 20/64; G06V 40/172**

(86) International application number:
**PCT/CN2022/127846**

(87) International publication number:
**WO 2023/072175 (04.05.2023 Gazette 2023/18)**

(54) **POINT CLOUD DATA PROCESSING METHOD, NEURAL NETWORK TRAINING METHOD, AND RELATED DEVICE**

PUNKTWOLKENDATENVERARBEITUNGSVERFAHREN, TRAININGSVERFAHREN FÜR NEURONALES NETZWERK UND ZUGEHÖRIGE VORRICHTUNG

PROCÉDÉ DE TRAITEMENT DE DONNÉES DE NUAGE EN POINTS, PROCÉDÉ D'APPRENTISSAGE DE RÉSEAU NEURONAL ET DISPOSITIF ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.10.2021 CN 202111278599**

(43) Date of publication of application:
**14.08.2024 Bulletin 2024/33**

(73) Proprietor: **Huawei Technologies Co., Ltd.
Shenzhen, Guangdong 518129 (CN)**

(72) Inventors:
• **NIU, Minzhe
Shenzhen, Guangdong 518129 (CN)**
• **XU, Hang
Shenzhen, Guangdong 518129 (CN)**
• **XU, Chunjing
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2021/051539    CN-A- 110 322 453
CN-A- 111 738 403    CN-A- 113 066 124
CN-A- 114 140 841    US-A1- 2019 156 206
US-A1- 2021 278 852    US-A1- 2021 278 852
US-B1- 10 970 518

• PRARTHANA BHATTACHARYYA ET AL: "SA-Det3D: Self-Attention Based Context-Aware 3D Object Detection", ARXIV.ORG, CORNELL UNIVERSITY LIBRARY, 201 OLIN LIBRARY CORNELL UNIVERSITY ITHACA, NY 14853, 7 January 2021 (2021-01-07), XP091025739

EP 4 414 862 B1

**(Cont. next page)**

- YIN ZHOU ET AL: "VoxelNet: End-to-End Learning for Point Cloud Based 3D Object Detection", ARXIV.ORG, CORNELL UNIVERSITY LIBRARY, 201 OLIN LIBRARY CORNELL UNIVERSITY ITHACA, NY 14853, 17 November 2017 (2017-11-17), XP081289395
- YAN YAN ET AL: "SECOND: Sparsely Embedded Convolutional Detection", SENSORS, vol. 18, no. 10, 6 October 2018 (2018-10-06), pages 3337, XP055866583, DOI: 10.3390/s18103337
- WU YUTIAN ET AL: "Deep 3D Object Detection Networks Using LiDAR Data: A Review", IEEE SENSORS JOURNAL, IEEE, USA, vol. 21, no. 2, 31 August 2020 (2020-08-31), pages 1152 - 1171, XP011826761, ISSN: 1530-437X, [retrieved on 20201217], DOI: 10.1109/JSEN.2020.3020626

**Description**

**TECHNICAL FIELD**

This application relates to the field of artificial intelligence, and in particular, to a point cloud data processing method, a computer program product, a computer-readable storage medium, and an execution device.

**BACKGROUND**

PRARTHANA BHATTACHARYYA ET AL: "SA-Det3D: Self-Attention Based Context-Aware 3D Object Detection", ARXIV.ORG, 201 OLIN LIBRARY CORNELL UNIVERSITY ITHACA, NY 14853, 7 January 2021 (2021-01-07) describes a selfattention based framework to augment convolutional features with global contextual information for 3D object detection.

YIN ZHOU ET AL: "VoxelNet: End-to-End Learning for Point Cloud Based 3D Object Detection", ARXIV.ORG, 201 OLIN LIBRARY CORNELL UNIVERSITY ITHACA, NY 14853, 17 November 2017 (2017-11-17) describes an end-to-end trainable deep architecture for point cloud based 3D detection.

US 10 970 518 B1 describes systems and algorithms for 3D object detection.

Yan Yan ET AL: "SECOND: Sparsely Embedded Convolutional Detection", Sensors, vol. 18, no. 10, 6 October 2018 (2018-10-06), page 3337, DOI: 10.3390/s18103337 describes an approach to data augmentation that makes full use of the advantages of point clouds.

US 2019/156206 A1 describes a method for analysing data with spatial and/or temporal structure using machine learning within network environments.

US 2021/278852 A1 describes systems and methods for generating attention masks.

WO 2021/051539 A1 describes a face recognition method and apparatus.

Artificial intelligence (Artificial Intelligence, AI) is a theory, method, technology, and application system that simulates, extends, and expands human intelligence, perceives an environment, obtains knowledge, and uses the knowledge to obtain an optimal result by using a digital computer or a digital computer-controlled machine. In other words, the artificial intelligence is a branch of computer science, and is intended to understand the essence of intelligence and produce a new intelligent machine that can react in a manner similar to human intelligence. The artificial intelligence is to study design principles and implementation methods of various intelligent machines, so that the machines have perceiving, inference, and decision-making functions.

It is a common processing manner in the field of autonomous driving to perform, by using a model, target detection on point cloud data corresponding to a surrounding environment of a vehicle. Specifically, a plurality of target key points are obtained through sampling from the point cloud data, and features of a plurality of points whose distances to the target key points are less than a sampling radius are obtained. Features of the target key points are updated based on the features of the plurality of points whose distances to the target key points are less than the sampling radius, to obtain an updated feature of each target key point. Target detection is performed based on the updated feature of each target key point, to obtain a prediction result corresponding to the point cloud data.

However, because all point clouds need to be sampled to determine the target key points, when a quantity of point clouds is large, a processing process of the entire point cloud data consumes a large quantity of computer resources.

**SUMMARY**

Embodiments of this application provide a point cloud data processing method, a computer program product, a computer-readable storage medium, and an execution device according to the independent claims, to perform a target detection operation based on features of a plurality of target cubes, and generate an updated feature of a first cube based on an attention mechanism. This not only reduces computer resources consumed in a processing process of entire point cloud data, but also helps focus on important information carried in the point cloud data to improve accuracy of a prediction result.

To resolve the foregoing technical problem, embodiments of this application provide the following technical solutions.

According to a first aspect, an embodiment of this application provides a computer-implemented point cloud data processing method, which may be used in the field of point cloud data processing in the field of artificial intelligence. The method may include: An execution device obtains point cloud data corresponding to a target environment, where the point cloud data includes initial information of a plurality of target points; and inputs the to-be-processed point cloud data into a target model to divide the to-be-processed point cloud data into a plurality of target cubes by using the target model. S target points exist in each target cube, and S is an integer greater than or equal to 0, and wherein the point cloud data are point cloud data collected by using one sensor or point cloud data obtained after fusion processing is performed on point cloud data collected by a plurality of sensors. The execution device generates an initial feature of each target cube based on the initial information of the target point in each target cube and by using the target model, and updates initial features of the plurality of target cubes based on an attention mechanism to obtain updated features of the plurality of target cubes. The execution device performs a feature processing operation based on the updated features of the plurality of target cubes and by using the target model, to obtain a prediction result corresponding to the point cloud data. The prediction result represents information about at least one object in the target environment. Further, the prediction result indicates location information or category information of the at least one object in the target environment.

In this implementation, after the initial feature of a first cube is generated based on the initial information of the target point in the first cube and by using the target model, the updated feature of the first cube is further generated based on the initial feature of the first cube and the attention mechanism. Further, target detection is performed based on the updated features of the plurality of target cubes. This helps focus on important information carried in the point cloud data to improve accuracy of the prediction result.

Further, the target model includes P first feature update modules, P is an integer greater than or equal to 1, and that the execution device updates initial features of the plurality of target cubes based on an attention mechanism includes: When the first cube meets a first preset condition, the execution device updates the feature of each first cube in the initial features of the plurality of target cubes based on the attention mechanism and by using the first feature update module. The first cube is any one of the plurality of target cubes, and the first preset condition is that the first cube is a non-empty cube, in other words, the first preset condition is that the first cube is not an empty cube. Further, meanings of the non-empty cube and the empty cube are opposite. A feature of each empty cube is preset information, in other words, a feature of each non-empty cube is not the preset information. Further, the initial feature of the first cube and the updated feature of the first cube may be specifically represented as vectors whose lengths are d, and the preset information is also represented as the vector whose length is d. For example, the preset information may be represented as a vector including d 0s. Alternatively, for example, the preset information may be represented as a vector including d 1s. Alternatively, the preset information may be represented as a vector including d different numbers, or the like.

In this way, only when the first cube is not the empty cube, the feature of the first cube is updated based on the attention mechanism. To be specific, after the first feature update module updates the plurality of target cubes corresponding to the to-be-processed point cloud data, distribution of empty cubes and non-empty cubes in the plurality of target cubes corresponding to the to-be-processed point cloud data does not change, so that the features of the plurality of target cubes are updated, and an edge feature of the object is retained.

In a possible implementation of the first aspect, the method is applied to the execution device. The execution device records the empty cube in the plurality of target cubes by using a hash table, and the hash table further records the non-empty cube in the plurality of target cubes. Further, the hash tables corresponding to the plurality of target cubes may include two parts: a key (key) and a value. The key part of the hash table may be obtained based on index information of the target cube. If a target cube is the empty cube, a value corresponding to the foregoing target cube that is the empty cube may be a preset value. If a target cube is not the empty cube, a value corresponding to the foregoing non-empty cube may be an order of the target cube in all non-empty cubes.

In this embodiment of this application, a manner of recording the empty cube in the plurality of target cubes by using the hash table can greatly improve efficiency of a process of obtaining the feature of the non-empty cube, and further help improve efficiency of a process of performing target detection based on the point cloud data.

Further, the target model includes Q second feature update modules, Q is an integer greater than or equal to 1, and that the execution device updates the initial feature of each target cube in the initial features of the plurality of target cubes based on an attention mechanism includes: When the first cube meets a second preset condition, the execution device updates the feature of each first cube in the initial features of the plurality of target cubes based on the attention mechanism and by using the second feature update module. The second preset condition is that the non-empty cube exists in a cube set, the cube set includes the first cube and at least one second cube corresponding to the first cube, and the at least one second cube is determined from the plurality of target cubes based on the attention mechanism.

In this way, only when both the first cube and a plurality of second cubes are empty cubes, the feature of the first cube is not updated by using the second feature update module, so that features of more target cubes are updated. This helps improve a feature obtaining capability of the target model.

In a possible implementation of the first aspect, the target model includes P first feature update modules and Q second feature update modules, and that the execution device updates the initial feature of each target cube in the initial features of the plurality of target cubes based on an attention mechanism includes: When the first cube meets a first preset condition, the execution device updates the feature of each first cube in the initial features of the plurality of target cubes based on the attention mechanism and by using the first feature update module. The first preset condition is that the first cube is the non-empty cube, and a feature of each non-empty cube is not preset information. When the first cube meets a second preset condition, the execution device updates the feature of each first cube in the initial features of the plurality of target cubes based on the attention mechanism and by using the second feature update module. The second preset condition is that the non-empty cube exists in a cube set, the cube set includes the first cube and at least one second cube corresponding to the first cube, and the at least one second cube is determined from the plurality of target cubes based on the attention mechanism.

In a possible implementation of the first aspect, a value of P is greater than a value of Q. In this embodiment of this application, the target model may include P first feature update modules and Q second feature update modules, and the value of P is greater than the value of Q. In this way, a feature obtaining capability of the target model is improved while an edge feature of the object is retained as much as possible. This helps improve accuracy of the finally obtained prediction result.

In a possible implementation of the first aspect, that the execution device updates the feature of each first cube in the initial features of the plurality of target cubes based on an attention mechanism may include: The execution device obtains, by using a first local attention operator, at least one second cube corresponding to the first cube, where the at least one second cube includes all target cubes in a preset range around the first cube, a distance between each second cube in the preset range around the first cube and the first cube is less than or equal to a preset distance threshold, and a value of the preset distance threshold may be one target cube, two target cubes, three target cubes, another value, or the like; and updates the feature of the first cube based on a feature of the at least one second cube and by using the first local attention operator; and/or

the execution device obtains, by using a second local attention operator, the at least one second cube corresponding to the first cube, where the at least one second cube is obtained by sampling the plurality of target cubes by using the first cube as a sampling center; and updates the feature of the first cube based on the feature of the at least one second cube and by using the second local attention operator.

In this embodiment of this application, two specific locations of the at least one second cube corresponding to the first cube are provided. This improves implementation flexibility of this solution. In addition, the at least one second cube is obtained by sampling the plurality of target cubes included in the to-be-processed data, in other words, the second cube may not be limited to a cube around the first cube. This greatly expands a receptive field of the target model, thereby improving the feature obtaining capability of the target model. This helps improve the accuracy of the finally obtained prediction result.

Further, that the execution device updates the feature of each first cube in the plurality of target cubes based on an attention mechanism further includes: The execution device generates features of a plurality of third cubes based on the feature of the second cube, where one third cube includes a plurality of second cubes; and updates the feature of each first cube in the plurality of target cubes based on the feature of each third cube and a global attention mechanism, where the global attention mechanism is one of attention mechanisms.

In this way, the plurality of second cubes corresponding to the first cube include all target cubes. To be specific, the feature of the first cube is updated by using features of all the target cubes corresponding to the to-be-processed point cloud data, so that a receptive field of the target model is further expanded, thereby further improving a feature obtaining capability of the target model. In addition, the third cube includes the plurality of second cubes, in other words, all the target cubes are divided into the plurality of third cubes. In this way, the feature of the first cube is updated by using the features of the plurality of third cubes. This helps improve efficiency of a feature update process.

In a possible implementation of the first aspect, the feature of the third cube may be statistical values of features of the plurality of second cubes included in the third cube, and the statistical values may specifically include any one or more of the following statistical features: a maximum value, a minimum value, a mean value, a variance, another type of statistical feature, or the like. Coordinates of the third cube may be coordinates of one of the plurality of second cubes included in the third cube. Specifically, coordinates of a second cube to be selected as the coordinates of the third cube may be determined based on a type of statistical feature used for the feature of the third cube.

In a possible implementation of the second aspect, that the execution device performs a feature processing operation on the updated features of the plurality of target cubes to obtain a prediction result corresponding to the point cloud data includes:

The execution device performs a target detection operation on the updated features of the plurality of target cubes to obtain the prediction result corresponding to the point cloud data. The prediction result indicates the location information of the at least one object in the target environment. The execution device configured with the target model may be any one of the following devices: a vehicle, a mobile robot, or a data monitoring and processing device. The prediction result indicates any one piece of the following information: a location of at least one object in a surrounding environment of the vehicle, a location of at least one object in a surrounding environment of the mobile robot, or an environment of at least one object in a monitoring environment.

Alternatively, the execution device performs a facial recognition operation on the updated features of the plurality of target cubes to obtain the prediction result corresponding to the point cloud data. The information about the at least one object in the target environment includes the category information of the at least one object in the target environment, and the category information of the at least one object in the target environment indicates that face matching succeeds or face matching fails. The execution device configured with the target model may be any one of the following devices: a terminal device, an intelligent lock, and a data monitoring and processing device.

Alternatively, the execution device performs a posture recognition operation on the updated features of the plurality of target cubes to obtain the prediction result corresponding to the point cloud data. The information about the at least one object in the target environment includes a body feature of at least one human body in the target environment and/or a gait feature of the at least one human body in the target environment during walking. Further, the body feature may be an appearance feature that may be visually and tactilely perceived and that is of the target object, and the body feature may be an inherent feature of the target object, for example, a body shape feature, a height feature, or a strong muscle feature. The gait feature refers to information related to a walking speed and a walking posture.

In this embodiment of this application, a plurality of application scenarios of this solution are provided. This improves implementation flexibility of this solution.

According to a second aspect, an embodiment of this application provides a point cloud data processing method comprising the steps of the method according to the first aspect, which may be used in the field of point cloud data processing in the field of artificial intelligence. The method may further include: An execution device obtains point cloud data corresponding to a surrounding environment of a target vehicle. The point cloud data includes initial information of a plurality of target points, the point cloud data is divided into a plurality of target cubes, S target points exist in one target cube, and S is an integer greater than or equal to 0. The execution device generates an initial feature of each target cube based on the initial information of the target point in each target cube, and updates initial features of the plurality of target cubes based on an attention mechanism to obtain updated features of the plurality of target cubes. The execution device performs a target detection operation on the updated features of the plurality of target cubes to obtain a prediction result corresponding to the point cloud data. The prediction result indicates a location of at least one object in the surrounding environment of the target vehicle.

In a possible implementation of the second aspect, that the execution device updates initial features of the plurality of target cubes based on an attention mechanism includes: when a first cube meets a first preset condition, updating the initial feature of each first cube in the plurality of target cubes based on the attention mechanism. The first cube is any one of the plurality of target cubes, the first preset condition is that the first cube is a non-empty cube, and a feature of the non-empty cube is not preset information.

In a possible implementation of the second aspect, that the execution device updates initial features of the plurality of target cubes based on an attention mechanism further includes: when the first cube meets a second preset condition, updating the feature of each first cube in the plurality of target cubes based on the attention mechanism. The second preset condition is that the non-empty cube exists in a cube set, the cube set includes the first cube and at least one second cube corresponding to the first cube, and the at least one second cube is determined from the plurality of target cubes based on the attention mechanism.

The execution device provided in the second aspect of this embodiment of this application may further perform the steps performed by the execution device in the possible implementations of the first aspect. For specific implementation steps of the second aspect and the possible implementations of the second aspect of this embodiment of this application, and beneficial effect brought by each possible implementation, refer to descriptions in the possible implementations of the first aspect. Details are not described herein one by one again.

According to a third aspect, an embodiment of this application provides a neural network training method comprising the steps of the method according to the first aspect, which may be used in the field of point cloud data processing in the field of artificial intelligence. The method may further include: A training device obtains point cloud data corresponding to a target environment. The point cloud data includes initial information of a plurality of target points, the point cloud data is divided into a plurality of target cubes, S target points exist in one target cube, and S is an integer greater than or equal to 0. The training device generates an initial feature of each target cube based on the initial information of the target point in each target cube and by using a to-be-trained model, and updates initial features of the plurality of target cubes based on an attention mechanism to obtain updated features of the plurality of target cubes. The training device performs a feature processing operation based on the updated features of the plurality of target cubes and by using the to-be-trained model to obtain a prediction result corresponding to the point cloud data. The training device trains the to-be-trained model according to a target loss function. The target loss function indicates a similarity between the prediction result and an expected result corresponding to the point cloud data.

In a possible implementation of the third aspect, that the training device updates initial features of the plurality of target cubes based on an attention mechanism includes: when a first cube meets a first preset condition, updating the initial feature of each first cube in the plurality of target cubes based on the attention mechanism. The first cube is any one of the plurality of target cubes, the first preset condition is that the first cube is a non-empty cube, and a feature of the non-empty cube is not preset information.

In a possible implementation of the third aspect, that the training device updates initial features of the plurality of target cubes based on an attention mechanism further includes: when the first cube meets a second preset condition, updating the feature of each first cube in the plurality of target cubes based on the attention mechanism. The second preset condition is that the non-empty cube exists in a cube set, the cube set includes the first cube and at least one second cube corresponding to the first cube, and the at least one second cube is determined from the plurality of target cubes based on the attention mechanism.

The training device provided in the third aspect of this embodiment of this application may further perform the steps performed by the execution device in the possible implementations of the first aspect. For specific implementation steps of the third aspect and the possible implementations of the third aspect of this embodiment of this application, and beneficial effect brought by each possible implementation, refer to descriptions in the possible implementations of the first aspect. Details are not described herein one by one again.

According to a fourth aspect, an embodiment of this application provides a point cloud data processing method comprising the steps of the method according to the first aspect, which may be used in the field of point cloud data processing in the field of artificial intelligence. The method may further include: An execution device detects an operation indicating facial recognition. The execution device outputs a facial recognition result in response to the operation indicating facial recognition. The facial recognition result includes matching success and a matching failure, the facial recognition result is obtained based on updated features of a plurality of target cubes, the updated feature of the target cube is obtained after an initial feature of the target cube is updated based on an attention mechanism, the initial feature of the target cube is obtained based on collected point cloud data corresponding to a target environment, the point cloud data includes initial information of a plurality of target points, the point cloud data is divided into the plurality of target cubes, S target points exist in one target cube, and S is an integer greater than or equal to 0.

In a possible implementation of the fourth aspect, the detecting an operation indicating facial recognition includes: considering that the operation indicating facial recognition is detected when detecting any one of the following operations: an operation of unlocking a mobile phone, a payment operation, or an operation of opening encrypted data; detecting a door opening operation input by the user; or detecting a face matching operation input by the user. In this embodiment of this application, a plurality of application scenarios in which the facial recognition operation is detected are provided. This improves implementation flexibility of this solution.

The execution device provided in the fourth aspect of this embodiment of this application may further perform the steps performed by the execution device in the possible implementations of the second aspect. For specific implementation steps of the fourth aspect and the possible implementations of the fourth aspect of this embodiment of this application, and beneficial effect brought by each possible implementation, refer to descriptions in the possible implementations of the second aspect. Details are not described herein one by one again.

According to a fifth aspect, an embodiment of this application provides a point cloud data processing apparatus, which may be used in the field of point cloud data processing in the field of artificial intelligence. The point cloud data processing apparatus is configured to perform the method according to the first aspect and includes an obtaining module, configured to obtain point cloud data corresponding to a target environment, where the point cloud data includes initial information of a plurality of target points, the point cloud data is divided into a plurality of target cubes, S target points exist in each target cube, and S is an integer greater than or equal to 0; a generation module, configured to generate an initial feature of each target cube based on the initial information of the target point in each target cube; an update module, configured to update initial features of the plurality of target cubes based on an attention mechanism to obtain updated features of the plurality of target cubes; and a processing module, configured to perform a feature processing operation on the updated features of the plurality of target cubes to obtain a prediction result corresponding to the point cloud data, where the prediction result represents information about at least one object in the target environment.

The point cloud data processing apparatus provided in the fifth aspect of this embodiment of this application may further perform the steps performed by the execution device in the possible implementations of the first aspect. For specific implementation steps of the fifth aspect and the possible implementations of the fifth aspect of this embodiment of this application, and beneficial effect brought by each possible implementation, refer to descriptions in the possible implementations of the first aspect. Details are not described herein one by one again.

According to a sixth aspect, an embodiment of this application provides a neural network training apparatus, which may be used in the field of point cloud data processing in the field of artificial intelligence. The neural network training apparatus is configured to perform the method according to the third aspect and may include: an obtaining module, configured to obtain point cloud data corresponding to a target environment, where the point cloud data includes initial information of a plurality of target points, the point cloud data is divided into a plurality of target cubes, S target points exist in one target cube, and S is an integer greater than or equal to 0; a generation module, configured to generate an initial feature of each target cube based on the initial information of the target point in each target cube and by using a to-be-trained model; an update module, configured to update initial features of the plurality of target cubes based on an attention mechanism to obtain updated features of the plurality of target cubes; a processing module, configured to perform a feature processing operation based on the updated features of the plurality of target cubes and by using the to-be-trained model to obtain a prediction result corresponding to the point cloud data; and a training module, configured to train the to-be-trained model according to a target loss function, where the target loss function indicates a similarity between the prediction result and an expected result corresponding to the point cloud data.

The neural network training apparatus provided in the sixth aspect of this embodiment of this application may further perform the steps performed by the training device in the possible implementations of the third aspect. For specific implementation steps of the sixth aspect and the possible implementations of the sixth aspect of this embodiment of this application, and beneficial effect brought by each possible implementation, refer to descriptions in the possible implementations of the third aspect. Details are not described herein one by one again.

According to a seventh aspect, an embodiment of this application provides a point cloud data processing apparatus, which may be used in the field of point cloud data processing in the field of artificial intelligence. The point cloud data processing apparatus is configured to perform the method according to the fourth aspect and includes: a detection module, configured to detect an operation indicating facial recognition; and an output module, configured to output a facial recognition result in response to the operation indicating facial recognition. The facial recognition result includes matching success and a matching failure, the facial recognition result is obtained based on updated features of a plurality of target cubes, the updated feature of the target cube is obtained after an initial feature of the target cube is updated based on an attention mechanism, the initial feature of the target cube is obtained based on collected point cloud data corresponding to a target environment, the point cloud data includes initial information of a plurality of target points, the point cloud data is divided into the plurality of target cubes, S target points exist in one target cube, and S is an integer greater than or equal to 0.

The point cloud data processing apparatus provided in the seventh aspect of this embodiment of this application may further perform the steps performed by the execution device in the possible implementations of the fourth aspect. For specific implementation steps of the seventh aspect and the possible implementations of the seventh aspect of this embodiment of this application, and beneficial effect brought by each possible implementation, refer to descriptions in the possible implementations of the third aspect. Details are not described herein one by one again.

According to an eighth aspect, an embodiment of this application provides a computer program product. When the computer program product is run on a computer, the computer is enabled to perform the point cloud data processing method according to the first aspect, the second aspect, or the fourth aspect, or the computer is enabled to perform the neural network training method according to the third aspect.

According to a ninth aspect, an embodiment of this application provides a computer-readable storage medium. The computer-readable storage medium stores a computer program. When the program runs on a computer, the computer is enabled to perform the point cloud data processing method according to the first aspect, the second aspect, or the fourth aspect, or the computer is enabled to perform the neural network training method according to the third aspect.

According to a tenth aspect, an embodiment of this application provides an execution device, which may include a processor. The processor is coupled to a memory, and the memory stores program instructions. When the program instructions stored in the memory are executed by the processor, the point cloud data processing method according to the first aspect, the second aspect, or the fourth aspect is implemented.

According to an eleventh aspect, an embodiment of this application provides a training device, which may include a processor. The processor is coupled to a memory, and the memory stores program instructions. When the program instructions stored in the memory are executed by the processor, the neural network training method according to the third aspect is implemented.

According to a twelfth aspect, an embodiment of this application provides a circuit system. The circuit system includes a processing circuit. The processing circuit is configured to perform the point cloud data processing method according to the first aspect, the second aspect, or the fourth aspect, or the processing circuit is configured to perform the neural network training method according to the third aspect.

According to a thirteenth aspect, an embodiment of this application provides a chip system. The chip system includes a processor, configured to implement functions in the foregoing aspects, for example, sending or processing data and/or information in the foregoing method. In a possible design, the chip system further includes a memory. The memory is configured to store program instructions and data that are necessary for a server or a communication device. The chip system may include a chip, or may include a chip and another discrete device.

## BRIEF DESCRIPTION OF DRAWINGS

FIG. 1a is a schematic diagram of a structure of an artificial intelligence main framework according to an embodiment of this application;
FIG. 1b is a diagram of an application scenario of a point cloud data processing method according to an embodiment of this application;
FIG. 2a is a diagram of a system architecture of a point cloud data processing system according to an embodiment of this application;
FIG. 2b is a schematic flowchart of a point cloud data processing method according to an embodiment of this application;
FIG. 2c is a schematic diagram of a target model in a point cloud data processing method according to an embodiment of this application;

FIG. 3 is another schematic flowchart of a point cloud data processing method according to an embodiment of this application;

FIG. 4 is a schematic diagram of to-be-processed point cloud data and a target cube in a point cloud data processing method according to an embodiment of this application;

FIG. 5 is a schematic diagram of a plurality of second cubes corresponding to a first local attention operator in a to-be-processed point cloud data processing method according to an embodiment of this application;

FIG. 6 is a schematic diagram of a plurality of second cubes corresponding to a second local attention operator in a to-be-processed point cloud data processing method according to an embodiment of this application;

FIG. 7 is a schematic diagram of a plurality of second cubes corresponding to a global attention operator in a to-be-processed point cloud data processing method according to an embodiment of this application;

FIG. 8 is a schematic diagram of a plurality of second cubes corresponding to a first local attention operator and a second local attention operator in a to-be-processed point cloud data processing method according to an embodiment of this application;

FIG. 9a is a schematic diagram of a first feature update module in a to-be-processed point cloud data processing method according to an embodiment of this application;

FIG. 9b is a schematic diagram of a first feature update module in a to-be-processed point cloud data processing method according to an embodiment of this application;

FIG. 10 is a schematic diagram of determining, by using a hash table, whether a plurality of target cubes are empty cubes in a to-be-processed point cloud data processing method according to an embodiment of this application;

FIG. 11 is a schematic diagram of feature update modules of a target model in a to-be-processed point cloud data processing method according to an embodiment of this application;

FIG. 12 is still another schematic flowchart of a point cloud data processing method according to an embodiment of this application;

FIG. 13 is a schematic flowchart of a neural network training method according to an embodiment of this application;

FIG. 14 is another schematic flowchart of a point cloud data processing method according to an embodiment of this application;

FIG. 15 is a schematic diagram of detecting an operation indicating facial recognition in a point cloud data processing method according to an embodiment of this application;

FIG. 16 is a schematic diagram of a structure of a point cloud data processing apparatus according to an embodiment of this application;

FIG. 17 is a schematic diagram of another structure of a point cloud data processing apparatus according to an embodiment of this application;

FIG. 18 is a schematic diagram of a structure of a neural network training apparatus according to an embodiment of this application;

FIG. 19 is a schematic diagram of another structure of a point cloud data processing apparatus according to an embodiment of this application;

FIG. 20 is a schematic diagram of a structure of an execution device according to an embodiment of this application;

FIG. 21 is a schematic diagram of a structure of a training device according to an embodiment of this application; and

FIG. 22 is a schematic diagram of a structure of a chip according to an embodiment of this application.

## DESCRIPTION OF EMBODIMENTS

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects that have a same attribute are described in embodiments of this application. In addition, terms "include", "have", and any other variations thereof are intended to cover a non-exclusive inclusion, so that a process, method, system, product, or device that includes a series of units is not limited to those units, but may include other units not expressly listed or inherent to such a process, method, product, or device.

The following describes embodiments of this application with reference to the accompanying drawings. A person of ordinary skill in the art may learn that, with development of technologies and emergence of a new scenario, the technical solutions according to embodiments of this application are also applicable to a similar technical problem.

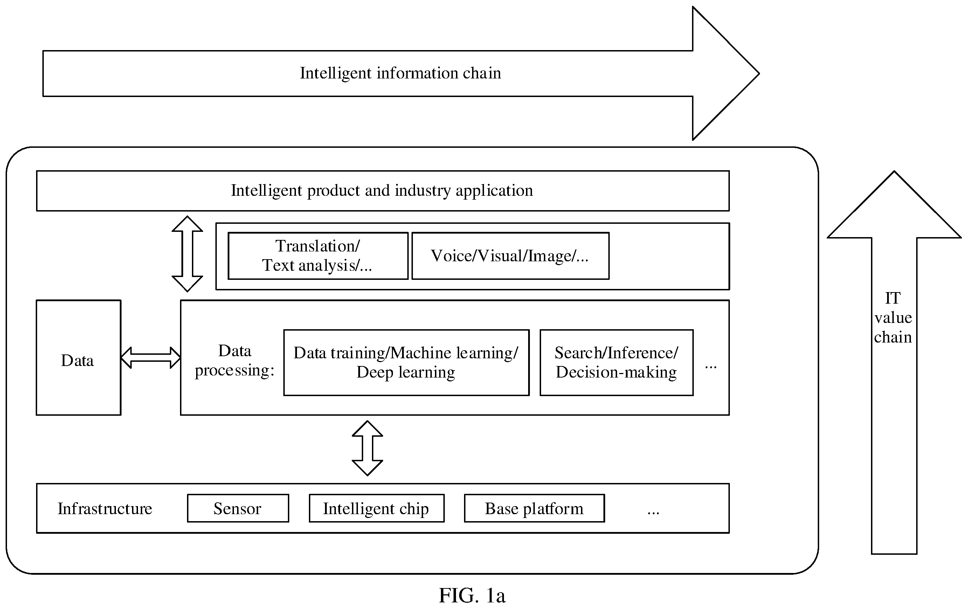

An overall working procedure of an artificial intelligence system is first described with reference to FIG. 1a. FIG. 1a is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry in a process from an underlying infrastructure and information (providing and processing technology implementation) of human intelligence to a systemic industrial ecology.

(1) Infrastructure

The infrastructure provides computing capability support for the artificial intelligence system, implements communication with the external world, and implements support by using a base platform. The infrastructure communicates with the outside by using a sensor. A computing capability is provided by an intelligent chip, and the intelligent chip may specifically use a hardware acceleration chip such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The basic platform includes related platforms, for example, a distributed computing framework and a network, for assurance and support, including cloud storage and computing, an interconnection network, and the like. For example, the sensor communicates with the outside to obtain data, and the data is provided to an intelligent chip in a distributed computing system for computation, where the distributed computing system is provided by the base platform.

(2) Data

Data at an upper layer of the infrastructure indicates a data source in the field of artificial intelligence. The data relates to a graph, an image, a voice, and text, further relates to Internet of things data of a conventional device, and includes service data of an existing system and perception data such as force, displacement, a liquid level, a temperature, and humidity.

(3) Data processing

Data processing usually includes manners such as data training, machine learning, deep learning, searching, inference, and decision-making.
Machine learning and deep learning may mean performing symbolized and formalized intelligent information modeling, extraction, preprocessing, training, and the like on data.
Inference is a process in which a pattern of human intelligent inference is simulated in a computer or an intelligent system, and machine thinking and problem resolving are performed by using formalized information according to an inferring control policy. A typical function is searching and matching.
Decision-making is a process in which a decision is made after intelligent information is inferred, and usually provides functions such as classification, ranking, and prediction.

(4) General capabilities

After data processing mentioned above is performed on data, some general capabilities may further be formed based on a data processing result, for example, an algorithm or a general system, such as translation, text analysis, computer vision processing, speech recognition, and image recognition.

(5) Intelligent product and industry application

Intelligent products and industry applications are products and applications of the artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.
This application may be applied to the field of point cloud data processing in the field of artificial intelligence. Specifically, this application may be applied to an application scenario in which target detection, facial recognition, or posture recognition is performed by using point cloud data, or another application scenario. The following uses examples to describe specific application scenarios of embodiments of this application.

Application scenario 1: target detection

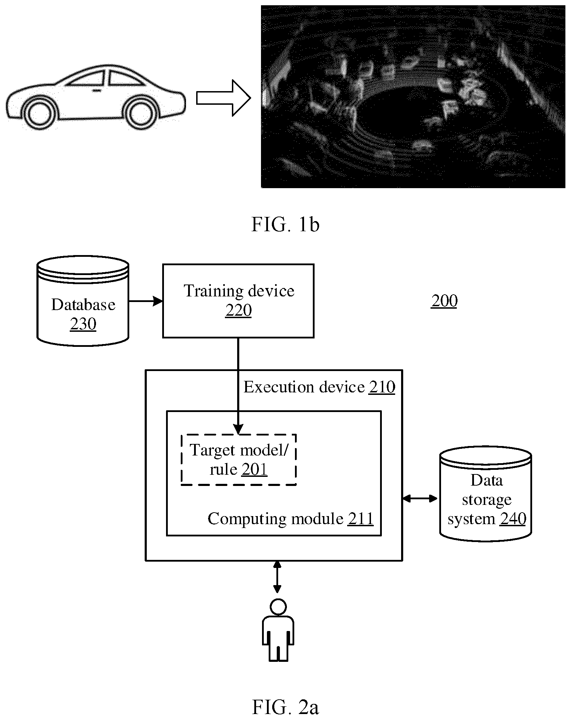

In this embodiment of this application, for example, in the field of autonomous driving, a self-driving vehicle collects, by using a sensor, point cloud data corresponding to a surrounding environment of the self-driving vehicle, and performs target detection based on the collected point cloud data by using a target model, to obtain a prediction result corresponding to the point cloud data. The prediction result indicates a location of at least one object in the surrounding environment of the target vehicle, and the self-driving vehicle may plan a traveling path of the self-driving vehicle based on the prediction result. For a more intuitive understanding of this solution, refer to FIG. 1b. FIG. 1b is an application scenario diagram of a point cloud data processing method according to an embodiment of this application. As shown in the figure, a vehicle on the left of the figure can collect, by using a sensor, point cloud data shown on the right of the figure. The vehicle performs target detection based on the collected point cloud data and by using a target model. It should be understood that the example herein is merely for ease of understanding this solution, and is not intended to limit this solution.

It should be noted that the vehicle may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

For another example, in the field of intelligent home, a mobile robot (for example, a sweeping robot, a tutoring robot, or another movable robot) may collect point cloud data corresponding to a surrounding environment of the robot, and perform target detection based on the collected point cloud data and by using a target model, to obtain a prediction result corresponding to the point cloud data. The prediction result indicates a location of at least one obstacle around the mobile robot.

For another example, in the field of intelligent manufacturing, a monitoring device configured in a factory may collect point cloud data corresponding to a monitoring area, and perform target detection based on the collected point cloud data and by using a target model, to obtain a prediction result corresponding to the point cloud data. The prediction result indicates a location of at least one object in the monitoring area.

Application scenario 2: facial recognition

In this embodiment of this application, for example, in the field of an intelligent terminal, when a terminal device needs to unlock a screen, perform payment, open encrypted data, or perform another operation, the terminal device may collect point cloud data corresponding to a surrounding environment, and perform identity authentication based on the collected point cloud data and through facial recognition. In this way, only a specific user successfully performs the foregoing operation.

For another example, in the field of intelligent security protection, an intelligent lock may collect point cloud data corresponding to a surrounding environment, and perform identity authentication based on the collected point cloud data and through facial recognition. In this way, only a specific user successfully opens the intelligent lock.

For another example, in the field of intelligent security protection, intelligent surveillance may collect point cloud data corresponding to a surrounding environment. When a target face exists in the surrounding environment, feature information of the target face may be obtained based on the collected point cloud data, and the feature information is compared with facial features of a plurality of people in a database to obtain identity information of the target face.

Application scenario 3: posture recognition

In this embodiment of this application, in the field of smart home, the field of an intelligent terminal, or another field, posture recognition may be performed based on collected point cloud data of a human body to obtain a posture feature corresponding to the human body.

Posture features may include a body feature and/or a gait feature during walking. Further, the body feature may be an appearance feature that may be visually and tactilely perceived and that is of a target object, and the body feature may be an inherent feature of the target object, for example, a body shape feature, a height feature, or a strong muscle feature. The gait feature refers to information related to a walking speed and a walking posture. Because there are subtle differences in muscle strength, tendon and bone lengths, bone density, visual sensitivity, coordination capabilities, weight, centers of gravity, degrees of muscle or bone damage, physiological conditions, and individual walking styles that are of different target objects, gait features of different target objects are different.

For example, in a smart home scenario, movement of a target object may be movement during walking on the ground, and posture features may include a body feature during walking and a gait feature during walking. In a smart cockpit scenario, movement of a target object may be movement during getting on and off a vehicle, and posture features may include body features during getting on and off the vehicle, and the like.

It should be noted that the foregoing examples are merely used to facilitate understanding of application scenarios of this solution, and are not intended to limit this solution. All application scenarios of this embodiment of this application are not listed one by one herein. In all the foregoing scenarios, there is a problem that processing of the entire point cloud data consumes a large amount of computer resources.

To resolve the foregoing problem, before the point cloud data processing method provided in this embodiment of this application is described in detail, a point cloud data processing system according to embodiment of this application is first described with reference to FIG. 2a. FIG. 2a is a diagram of a system architecture of a point cloud data processing system according to an embodiment of this application. In FIG. 2a, the point cloud data processing system 200 includes an execution device 210, a training device 220, a database 230, and a data storage system 240. The execution device 210 includes a computing module 211.

The database 230 stores a training dataset. The training device 220 generates a target model/rule 201, and performs iterative training on the target model/rule 201 by using the training dataset in the database 230 to obtain the mature target model/rule 201. Further, the target model/rule 201 may be specifically implemented by using a model of a neural network type or a model of a non-neural network type.

The mature target model/rule 201 obtained by the training device 220 may be applied to different systems or devices, for example, a vehicle, a mobile robot, a data monitoring and processing device, or another point cloud data processing device. The execution device 210 may invoke data, code, and the like in the data storage system 240, or may store data, instructions, and the like in the data storage system 240. The data storage system 240 may be disposed in the execution device 210, or the data storage system 240 may be an external memory relative to the execution device 210.

The execution device 210 may obtain point cloud data corresponding to a target environment, and the computing module 211 may perform target detection based on the collected point cloud data and by using the target model/rule 201, to obtain a prediction result corresponding to the point cloud data. The prediction result indicates a location of at least one object in a surrounding environment of a target vehicle.

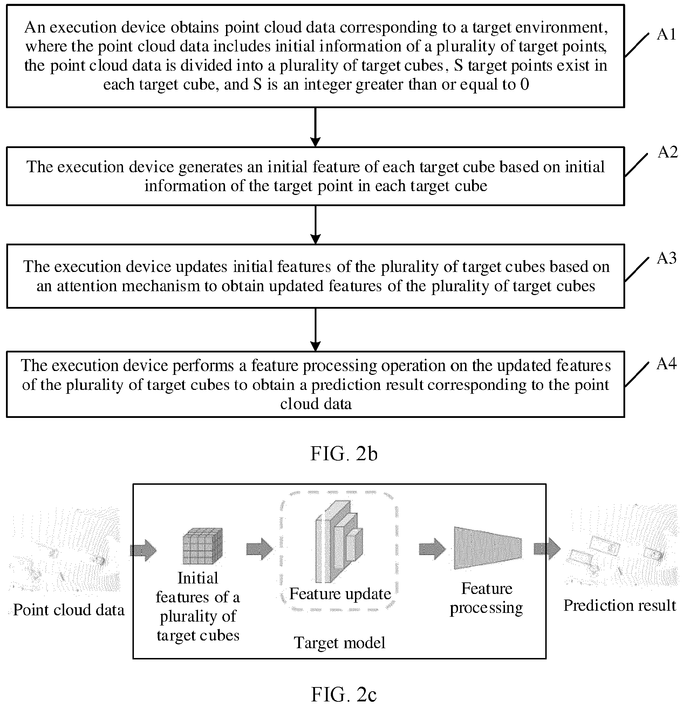

The execution device 210 may perform the following steps by using the target model/rule 201. Specifically, FIG. 2b is a schematic flowchart of a point cloud data processing method according to an embodiment of this application. A1: The execution device 210 obtains point cloud data corresponding to a target environment, where the point cloud data includes initial information of a plurality of target points, the point cloud data is divided into a plurality of target cubes, S target points exist in each target cube, and S is an integer greater than or equal to 0. A2: The execution device 210 generates an initial feature of each target cube based on the initial information of the target point in each target cube. A3: The execution device 210 updates initial features of the plurality of target cubes based on an attention mechanism to obtain updated features of the plurality of target cubes. A4: The execution device 210 performs a feature processing operation on the updated features of the plurality of target cubes to obtain a prediction result corresponding to the point cloud data, where the prediction result represents information about at least one object in the target environment.

Further, for ease of understanding of this solution, refer to FIG. 2c. FIG. 2c is a schematic diagram of a target model in a point cloud data processing method according to an embodiment of this application. As shown in the figure, after an execution device obtains point cloud data corresponding to a surrounding environment of a target vehicle, the point cloud data is divided into a plurality of target cubes by the target model, and initial features of the plurality of target cubes are generated. The execution device updates the feature of the target cube by using the target model to obtain the updated features of the plurality of target cubes. The execution device performs a target detection operation on the updated features of the plurality of target cubes to obtain the prediction result corresponding to the point cloud data. The prediction result indicates a location of at least one object in the surrounding environment of the target vehicle. It should be understood that the example in FIG. 2c is merely for ease of understanding this solution, and is not intended to limit this solution.

In this embodiment of this application, the point cloud data corresponding to the surrounding environment of the target vehicle is divided into the plurality of cubes, and the target detection operation is performed based on the features of the plurality of target cubes. In other words, a minimum granularity of a processed object in this embodiment of this application is one cube instead of one target point. This reduces computer resources consumed in a processing process of the entire point cloud data, and helps improve operation efficiency of the target model. An updated feature of a first cube is further generated based on an initial feature of the first cube and the attention mechanism. Further, target detection is performed based on the updated features of the plurality of target cubes. This helps focus on important information carried in the point cloud data, and improve accuracy of the prediction result.

In some embodiments of this application, refer to FIG. 2a. A "user" may directly interact with the execution device 210. It should be noted that FIG. 2a is merely a schematic diagram of an architecture of a point cloud data processing system according to an embodiment of the present invention. Location relationships between devices, components, modules, and the like shown in the figure do not constitute any limitation. For example, in some other embodiments of this application, the execution device 210 and a client device may alternatively be independent devices. An input/output (in/out, I/O) interface is configured for the execution device 210, and the execution device 210 exchanges data with the client device through the I/O interface.

For ease of understanding of this solution, before the point cloud data processing method provided in this embodiment of this application is described in detail, the following first describes related terms and concepts that may be used in embodiments of this application.

(1) Attention mechanism

In deep learning, the attention mechanism may be broadly defined as a weight vector that describes importance and through which an element is predicted or inferred. For example, for a pixel in an image or a word in a sentence, a correlation between a target element and another element may be quantitatively estimated by using attention vectors, and a weighted sum of the attention vectors is used as an approximation value of the target.
The attention mechanism in the deep learning simulates an attention mechanism of a human brain. For example, when a human views a painting, although human eyes can see a whole picture of the painting, when the human deeply and carefully observes the painting, the eyes actually focus on only some patterns of the whole painting. In this case, the human brain focuses on the small patterns. In other words, when the human carefully observes an image, attention of the human brain to the whole image is not balanced, and there is given weight distinction. This is a core idea of the attention mechanism.
In brief, a human visual processing system tends to selectively focus on some parts of the image and ignore other irrelevant information. This facilitates perception of the human brain. Similarly, in the attention mechanism of the deep learning, some parts of an input may be more relevant than another part in some questions related to a language, a speech, or vision. Therefore, an attention model can be enabled, through the attention mechanism in the attention model, to dynamically focus on only a part of the input that is conducive to effective execution of a task at hand.

(2) Feature update

Both a process of generating an initial feature of a first cube by using a target model and a process of updating the feature of the first cube to obtain an updated feature of the first cube are included in a process of performing feature extraction on point cloud data by using the target model. The feature extraction is a process of converting original point cloud data into feature data suitable for modeling, while still accurately describing an original dataset.

(3) Empty cube

In a process of generating an initial feature of a first cube by using a target model, the empty cube is a cube that includes 0 points, and an execution device determines an initial feature of the empty cube as preset information. In a process of updating features of a plurality of target cubes, the feature of the empty cube is the preset information. To be specific, the empty cube includes the 0 points, and is skipped in the feature update process.

(4) Non-empty cube

Meanings of the "non-empty cube" and an "empty cube" are opposite, and the "non-empty cube" means that it is not an empty cube.

(5) Loss function

In a process of training a neural network, to enable an output of the neural network to be as much as possible close to a predicted value that is actually expected, a predicted value output by the neural network and an expected value that is actually expected may be compared, and then a weight vector at each layer of the neural network is updated based on a difference between the predicted value and the expected value (certainly, there is usually an initialization process before the first update, to be specific, parameters are preconfigured for all layers in the deep neural network). For example, if the predicted value of the network is high, the weight vector is adjusted to decrease the predicted value, and adjustment is continuously performed until the deep neural network can predict the expected value that is actually expected or a value that is very close to the expected value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the expected value. The loss function is used as an example. A higher output value (loss) of the loss function indicates a larger difference. Therefore, training of the neural network is a process of minimizing the loss as much as possible.

(6) Back propagation algorithm

In a training process, a neural network may correct a value of a parameter in an initial neural network by using a back propagation algorithm, so that a reconstruction error loss in the neural network becomes increasingly smaller. Specifically, an input signal is transferred forward until an error loss occurs at an output, and the parameter in the initial neural network is updated based on back propagation error loss information, to make the error loss converge. The back propagation algorithm is error-loss-centered back propagation motion intended to obtain a parameter of an optimal neural network.

With reference to the foregoing description, the following begins to describe specific implementation procedures of an inference phase and a training phase of the point cloud data processing method provided in this embodiment of this application.

1. Inference phase

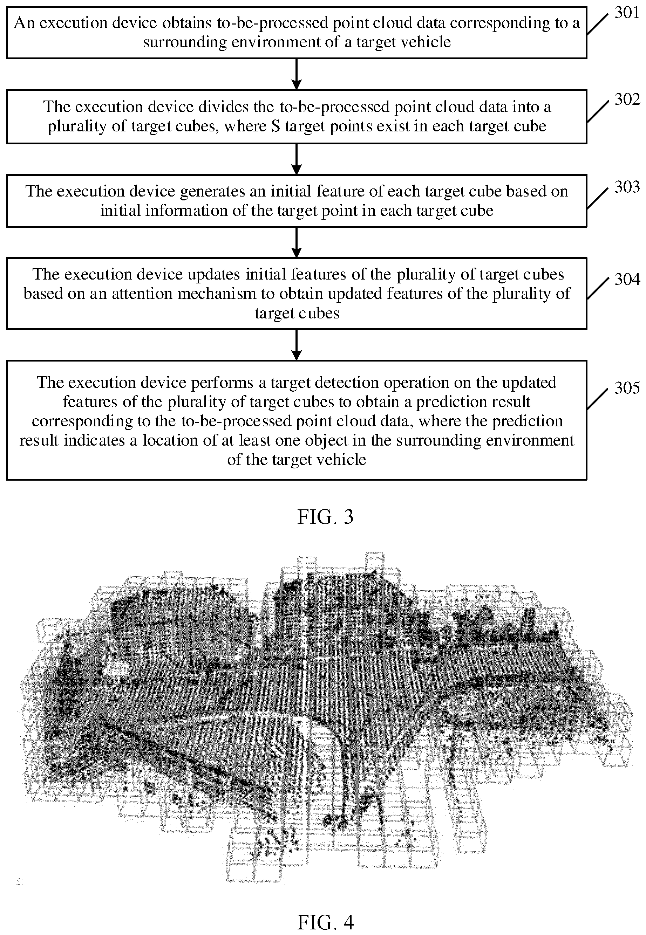

In this embodiment of this application, the inference phase describes a process in which the execution device 210 performs target detection on collected point cloud data by using the target model/rule 201 to generate a prediction result. Specifically, FIG. 3 is another schematic flowchart of a point cloud data processing method according to an embodiment of this application. In FIG. 3, an example in which an embodiment of this application is applied to the field of autonomous driving is first used for description. In other words, that "point cloud data corresponding to a target environment" is specifically "to-be-processed point cloud data corresponding to a surrounding environment of a target vehicle" is used as an example for description. The point cloud data processing method provided in this embodiment of this application may include the following steps.

301: An execution device obtains the to-be-processed point cloud data corresponding to the surrounding environment of the target vehicle.

In this embodiment of this application, the execution device needs to obtain the to-be-processed point cloud data (point cloud data) corresponding to the surrounding environment of the target vehicle. Specifically, in some application scenarios, the execution device may be the target vehicle, and the target vehicle may directly collect, by using a sensor, the to-be-processed point cloud data corresponding to the surrounding environment of the target vehicle. The sensor includes but is not limited to a laser radar, a millimeter wave radar, another sensor configured to collect point cloud data, or the like.

Further, the to-be-processed point cloud data may be point cloud data collected by using one sensor, or may be point cloud data obtained after fusion processing is performed on point cloud data collected by a plurality of sensors.

In some other application scenarios, the execution device may receive to-be-processed point cloud data sent by another execution device. In other words, the to-be-processed point cloud data does not necessarily describe an environment around the execution device.

In some other application scenarios, the execution device may further obtain the to-be-processed point cloud data from a plurality of pieces of locally stored point cloud data, and the like. A manner of obtaining the to-be-processed point cloud data by the execution device is not limited herein.

The to-be-processed point cloud data is used to describe a surrounding environment of the target vehicle at a target moment, and the target moment may be any moment. The to-be-processed point cloud data includes initial information of each of a plurality of target points corresponding to a surrounding environment at the target moment, and the initial information of the target point includes at least location information of the target point. Optionally, the to-be-processed point cloud data may further include color information, a timestamp, reflection intensity (intensity), secondary reflection intensity, another type of initial information, or the like corresponding to each target point. Specific information about each target point included in the to-be-processed point cloud data needs to be determined with reference to an actual product form. This is not limited herein.

Further, the location information of each target point may be three-dimensional spatial coordinates, and the three-dimensional spatial coordinates may be coordinates in a three-dimensional rectangular coordinate system, coordinates in a spherical coordinate system (spherical coordinate system), coordinates in another type of three-dimensional coordinate system, or the like. A location of any target point in the spherical coordinate system may be represented by three indexes: a radial distance, a zenith angle, and an azimuth.

To further understand a data form of the to-be-processed point cloud data, for example, the execution device collects surrounding environment data at a specific scanning rate by using the laser radar to obtain the to-be-processed point cloud data. The to-be-processed point cloud data includes coordinates of each of N target points in the three-dimensional rectangular coordinate system. The to-be-processed point cloud data may be represented as $\{p_j\}$, j = 1~N, and N represents a quantity of target points included in the to-be-processed point cloud data. $p_j$ represents any target point, $p_j = [x, y, z]$, included in the to-be-processed point cloud data.

302: The execution device divides the to-be-processed point cloud data into a plurality of target cubes, where S target points exist in each target cube.

In this embodiment of this application, after obtaining the to-be-processed point cloud data, the execution device may input the to-be-processed point cloud data into a target model to divide the to-be-processed point cloud data into the plurality of target cubes based on the location information of each target point included in the to-be-processed point cloud data and by using the target model. The S target points exist in each target cube, and S is an integer greater than or equal to 0. Each target cube may also be referred to as a voxel (voxel), and the voxel is short for a volume pixel (volume pixel).

For a more intuitive understanding of this solution, refer to FIG. 4. FIG. 4 is a schematic diagram of to-be-processed point cloud data and a target cube in a point cloud data processing method according to an embodiment of this application. In FIG. 4, a three-dimensional rectangular coordinate system is used as an example for points in the to-be-processed point cloud data. FIG. 4 shows the point cloud data located in the three-dimensional rectangular coordinate system and a plurality of target cubes corresponding to the point cloud data. In FIG. 4, only a non-empty cube is shown as an example. As shown in FIG. 4, each non-empty cube includes a plurality of points. It should be understood that, in an actual case, a plurality of target cubes corresponding to the to-be-processed point cloud data also include an empty cube. In addition, the points in the to-be-processed point cloud data may alternatively be coordinates in another type of coordinate system. A specific case should be determined with reference to an actual situation. The example in FIG. 4 is merely used to facilitate understanding of a correspondence between the to-be-processed point cloud data and the target cube, and is not intended to limit this solution.

Optionally, the execution device may further set a first threshold. The first threshold is an upper limit of a quantity of target points that can be accommodated in each target cube. If a quantity of target points in a target cube is greater than the first threshold, at least one target point that exceeds the first threshold in the target cube is discarded to ensure that a quantity of target points in each processed target cube is less than or equal to the first threshold.

303: The execution device generates an initial feature of each target cube based on the initial information of the target point in each target cube.

In this embodiment of this application, after dividing the to-be-processed data into the plurality of target cubes, for any one (for ease of description, hereinafter referred to as a "first cube") of the plurality of target cubes, the execution device generates the initial feature of the first cube and coordinates of the first cube in the three-dimensional coordinate system based on the initial information of the target point in the first cube and by using the target model.

The initial feature of the first cube may be specifically represented as a vector whose length is d. In other words, regardless of a quantity of target points included in a target cube, the initial feature of each target cube may be represented as a vector whose length is d. The coordinates of the first cube in the three-dimensional coordinate system may be coordinates of a center point of the first cube in the three-dimensional coordinate system.

Specifically, the execution device may determine, by using the target model, whether the quantity of target points in the first cube is 0. If the quantity of target points in the first cube is not 0, the execution device may perform feature extraction on the first cube based on initial information of at least one target point in the first cube and by using the target model, to obtain the initial feature of the first cube. If the quantity of target points in the first cube is 0, preset information may be determined as the initial feature of the first cube.

The preset information is also represented as a vector whose length is d. For example, the preset information may be represented as a vector including d 0s. Alternatively, for example, the preset information may be represented as a vector including d 1s. Alternatively, the preset information may be represented as a vector including d different numbers, or the like. It should be understood that an example herein is merely used to facilitate understanding of a concept of the preset information, and a specific representation form of the preset information needs to be determined with reference to an actual application scenario. This is not limited herein.

The execution device repeatedly performs the foregoing steps for a plurality of times, until the initial feature of each target cube corresponding to the to-be-processed point cloud data is obtained.

304: The execution device updates initial features of the plurality of target cubes based on an attention mechanism to obtain updated features of the plurality of target cubes.

In this embodiment of this application, the execution device updates the initial features of the plurality of target cubes based on the attention mechanism to obtain the updated features of the plurality of target cubes. For any one (for ease of description, hereinafter referred to as the "first cube") of the plurality of target cubes, the execution device updates the feature of the first cube based on the initial feature of the first cube and the attention mechanism (attention mechanism), and by using the target model, to obtain the updated feature of the first cube. A specific representation form of the updated feature of the first cube may be similar to a specific representation form of the initial feature of the first cube, and the updated feature of the first cube may also be specifically represented as a vector whose length is d.

Specifically, in an implementation, the target model may include P groups of first feature update modules that are sequentially arranged, and P is an integer greater than or equal to 1. In other words, the execution device may not only update the initial feature of the first cube, but also update the updated feature of the first cube. A group of first feature update modules includes one first feature update module. Alternatively, a group of first feature update modules may include a plurality of first feature modules that are arranged in parallel.

The step 304 may include: When determining, by using the first feature update module, that the first cube meets a first preset condition, the execution device updates the feature of the first cube based on the attention mechanism and by using the first feature update module. The first preset condition is that the first cube is the non-empty cube, in other words, the first preset condition is that the first cube is not the empty cube. Further, meanings of the non-empty cube and the empty cube are opposite. A feature of each empty cube is the preset information, in other words, a feature of each non-empty cube is not the preset information. When determining, by using the first feature update module, that the first cube does not meet the first preset condition, the execution device does not update the feature of the first cube, and processes a next target cube.

For a process in which the execution device determines whether the first cube meets the first preset condition, in an implementation, the execution device may record, by using a hash table, cubes that are in the plurality of target cubes and that are empty cubes, and record, by using the hash table, cubes that are in the plurality of target cubes and that are non-empty cubes.

Optionally, because the execution device records, by using the hash table, the cubes that are in the plurality of target cubes and that are the empty cubes and the cubes that are in the plurality of target cubes and that are the non-empty cubes, and features of the empty cubes are all the preset information, the feature information corresponding to the to-be-processed point cloud data may store only features of the non-empty cubes in the plurality of target cubes. Further, the execution device may store the features of the non-empty cubes in a data form of a sparse matrix.

It should be noted that, in a process of updating the features of the plurality of target cubes by using the first feature update module, when it is determined that the first cube is the empty cube, the feature of the first cube is not updated. After the features of the plurality of target cubes corresponding to the to-be-processed point cloud data are updated by using the first feature update module, the empty cube is still the empty cube. After features of all target cubes are updated by using the first feature update module, hash tables corresponding to the plurality of target cubes do not change. In other words, two adjacent first feature update modules may share a same hash table to further reduce a calculation amount in a process of obtaining a prediction result.

In this case, the execution device may determine whether the first cube is the empty cube based on index information of the first cube and by looking up a table (that is, a hash table). Index information of each target cube may also be referred to as identification information of each target cube, or may also be referred to as a global index (global index) of each target cube.

In an implementation, the index information of the first cube may be location information of the first cube. For example, with reference to FIG. 4, the plurality of target cubes corresponding to the to-be-processed point cloud data can form a large cube, and the location information of the first cube is separately located by using numbers in three dimensions: a length, a width, and a height. For example, the plurality of target cubes corresponding to the to-be-processed point cloud data can form a large cube with a length of 68 target cubes, a width of 50 target cubes, and a height of 25 target cubes. Index information of one first cube may be any one of $(0, 0, 0)$, $(0, 1, 0)$, ..., $(31, 44, 24)$, $(31, 45, 24)$, ..., or $(67, 49, 24)$.

In another implementation, the index information of the first cube may be a character string that one-to-one corresponds to the location information of the first cube. For example, the location information of the first cube is $(1, 2, 0)$. A large cube in which the first cube is located and that includes all cubes corresponding to the to-be-processed point cloud data is $1024 \times 1024 \times 42$, and the index information of the first cube may be converted into $1 \times (1024 \times 42) + 2 \times 42 + 0 = 43092$. It should be understood that the example herein is merely for ease of understanding this solution, and is not intended to limit this solution.

The hash tables corresponding to the plurality of target cubes may include two parts: a key (key) and a value. The key part of the hash table may be obtained based on the index information of the target cube. If a target cube is the empty cube, a value corresponding to the foregoing target cube that is the empty cube may be a preset value. If a target cube is not the empty cube, a value corresponding to the foregoing non-empty cube may be an order of the target cube in all non-empty cubes.

Further, for a process of creating the hash tables corresponding to the plurality of target cubes, for example, the execution device may first establish, based on a mapping range of a hash function, a hash table whose values are all -1 (that is, an example in which the preset value is -1 is used). For a non-empty cube (that is, an example of the target cube) whose order is 0 in all the non-empty cubes, index information of the target cube is $(1, 2, 0)$. In addition, a large cube in which the target cube is located and that includes all the cubes corresponding to the to-be-processed point cloud data is $1024 \times 1024 \times 42$. In this case, the index information of the target cube may be converted into $1 \times (1024 \times 42) + 2 \times 42 + 0 = 43092$. It is assumed that the used hash function is $f(x) = x \% 1001$. The key and the value that correspond to the target cube are stored at a $(43092 \% 1001=) 49^{th}$ location in the hash table. A key-value pair stored at the $49^{th}$ location of the hash table is $(43092, 0)$. If a hash collision occurs, the corresponding key-value pair is put to a next location that is not -1. The execution device performs the foregoing operation on all the non-empty cubes to complete establishment of the hash tables corresponding to the plurality of target cubes. It should be understood that the example herein is merely for understanding implementability of this solution, and is not intended to limit this solution.

Specifically, for a query process of the first cube, the execution device obtains the location information of the first cube, obtains the character string that one-to-one corresponds to the location information of the first cube, and inputs the character string into the hash function to obtain the index information of the first cube in the hash table.

The execution device obtains a key from a corresponding location in the hash table based on the index information of the first cube in the hash table; determines whether the obtained key is consistent with the obtained index information; and if no, searches for a key at a next location until a key consistent with the obtained index information is found from the hash table, and obtains, from the hash table, a value corresponding to the key; or if yes, obtains a value corresponding to the key.

Whether the obtained value corresponding to the key is the preset value is determined. If yes, that the first cube is the empty cube is determined; or if no, the obtained value is an order of the first cube in a plurality of non-empty cubes, and the feature of the first cube is obtained from features of all the non-empty cubes corresponding to the to-be-processed point cloud data.

In another implementation, the execution device may alternatively obtain, based on the index information of the first cube, the feature of the first cube from feature information corresponding to all the target cubes; determine whether the feature of the first cube is the preset feature; and if the feature of the first cube is the preset feature, determine that the first cube is the empty cube; or if the feature of the first cube is not the preset feature, determine that the first cube is the non-empty cube, and obtain the feature of the first cube.

For a process in which the execution device updates the feature of the first cube based on the attention mechanism, the execution device updates the feature of the first cube based on the attention mechanism and by using at least one attention operator in the first feature update module, to obtain the updated feature of the first cube.

Specifically, if the at least one attention operator includes a plurality of attention operators, the execution device may update the feature of the first cube based on the attention mechanism and by using the plurality of attention operators in the first feature update module, to obtain a plurality of updated features of the first cube. The execution device fuses the plurality of updated features of the first cube by using the first feature update module to obtain the updated features of the first cube that are finally generated by the first feature update module. The at least one attention operator may include any one or more of the following attention operators: a first local attention operator, a second local attention operator, a global attention operator, a self-attention operator, or another type of attention operator.

More specifically, in a case, the execution device determines, by using the first local attention operator in the first feature update module, a plurality of second cubes corresponding to the first local attention operator, and may filter out, according to the foregoing hash table, the empty cube from the plurality of second cubes obtained by using the first local attention operator to obtain a feature of at least one filtered second cube, and update the feature of the first cube based on the attention mechanism. A concept of the "feature of the second cube" is similar to a concept of the "feature of the first cube" in this embodiment of this application. The feature of the second cube may be an initial feature of the second cube, or may be an updated feature of the second cube.

At least one second cube corresponding to the first local attention operator includes all target cubes in a preset range around the first cube, and a distance between the second cube in the preset range around the first cube and the first cube is less than or equal to a preset distance threshold. In other words, each second cube corresponding to the first local attention operator may be in direct contact with the first cube, or may be in indirect contact with the first cube.

For example, a value of the preset distance threshold may be one target cube, two target cubes, three target cubes, another value, or the like.

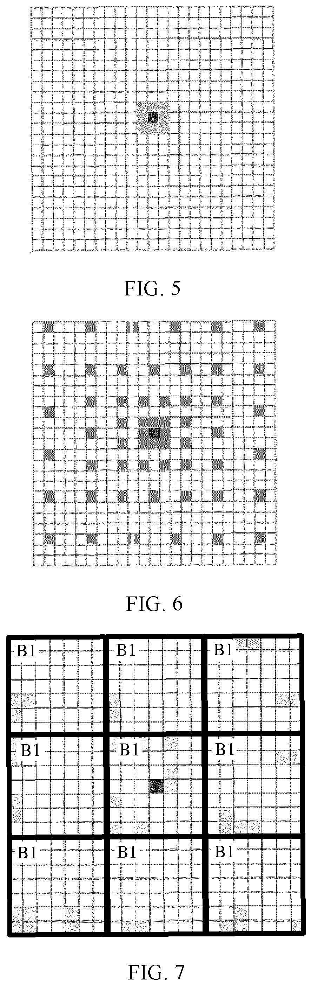

For a more intuitive understanding of this solution, refer to FIG. 5. FIG. 5 is a schematic diagram of a plurality of second cubes corresponding to a first local attention operator in a to-be-processed point cloud data processing method according to an embodiment of this application. A plurality of target cubes included in to-be-processed point cloud data are established in a three-dimensional coordinate system. Herein, a relationship between a first cube and the second cube is explained only in a manner of a two-dimensional image. All second cubes corresponding to the first cube are represented as $\Omega(xyz)$. As shown in FIG. 5, $\Omega(xyz) = \{(x', y', z')\|x' - x\| \leq 1, |y' - y| \leq 1, |z' - z| \leq 1\}$. To be specific, at least one second cube corresponding to the first local attention operator includes all target cubes that are located around the first cube and that are in direct contact with the first cube. It should be understood that the example in FIG. 5 is merely for ease of understanding this solution, and is not intended to limit this solution.

In another case, an execution device determines, by using a second local attention operator in a first feature update module, a plurality of second cubes corresponding to the second local attention operator, and may filter out, according to the foregoing hash table, an empty cube from the plurality of second cubes obtained by using the second local attention operator to obtain a feature of at least one filtered second cube, and update a feature of the first cube based on an attention mechanism. The at least one second cube corresponding to the second local attention operator is obtained by sampling, by using the first cube as a sampling center, the plurality of target cubes included in the to-be-processed point cloud data. The sampling process may be random sampling, or may be sampling based on a preset rule.

For a more intuitive understanding of this solution, refer to FIG. 6. FIG. 6 is a schematic diagram of a plurality of second cubes corresponding to a second local attention operator in a to-be-processed point cloud data processing method according to an embodiment of this application. A plurality of target cubes included in to-be-processed point cloud data are established in a three-dimensional coordinate system. Herein, a relationship between a first cube and the second cube is explained only in a manner of a two-dimensional image. All second cubes corresponding to the first cube are represented as $\Omega(xyz)$. As shown in FIG. 6, $\Omega(xyz)$ is performing a sampling operation on the second cube in a manner of gradually expanding an interval. At an innermost layer, sampling is performed at an interval of 1; at a secondary inner layer, sampling is performed at an interval of 2; at a third layer, sampling is performed at an interval of 3; and the rest can be deduced by analogy. It should be understood that the example in FIG. 6 is merely an example for ease of understanding the plurality of second cubes corresponding to the second local attention operator, and is not intended to limit this solution.

In this embodiment of this application, two specific locations of the at least one second cube corresponding to the first cube are provided. This improves implementation flexibility of this solution. In addition, the at least one second cube is obtained by sampling the plurality of target cubes included in the to-be-processed data, in other words, the second cube may not be limited to a cube around the first cube. This greatly expands a receptive field of a target model, thereby improving a feature obtaining capability of the target model. This helps improve accuracy of a finally obtained prediction result.

In another case, an execution device may generate a feature of each third cube based on features of the plurality of second cubes and by using a global attention operator in a first feature update module. The plurality of second cubes include all target cubes corresponding to the to-be-processed point cloud data, and each third cube includes a plurality of second cubes. In other words, all the target cubes corresponding to the to-be-processed point cloud data are divided into a plurality of third cubes. The execution device may further filter out an empty cube from the plurality of third cubes, and update the feature of the first cube based on a global attention mechanism and a feature of each third cube that is not the empty cube. If one third cube is the empty cube, it indicates that all the second cubes included in the third cube are empty cubes. If at least one second cube in one third cube is not the empty cube, it indicates that the entire third cube is not the empty cube.

Further, for a process in which the execution device generates the feature of the third cube based on the features of the plurality of second cubes, the feature of the third cube may be statistical values of features of the plurality of second cubes included in the third cube, and the statistical values may specifically include any one or more of the following statistical features: a maximum value, a minimum value, a mean value, a variance, another type of statistical feature, or the like. Coordinates of the third cube may be coordinates of one of the plurality of second cubes included in the third cube. Specifically, coordinates of a second cube to be selected as the coordinates of the third cube may be determined based on a type of statistical feature used for the feature of the third cube.

For a more intuitive understanding of this solution, the following shows the feature and the coordinates of the third cube by using formulas:

$$f_{super} \in \mathbb{R}^{N_k \times d} \quad (1)$$

$$p_{super} = MLP(f_{super}) \in \mathbb{R}^{N_k \times 3} \quad (2)$$

$f_{super}$ represents the feature of the third cube. For example, the minimum value, the maximum value, the mean value, and the variance may be selected as the feature of the third cube when $N_k = 4$. $p_{super}$ represents the coordinates of the third cube, and *MLP* is an English abbreviation of a multi-layer perceptron (multi-layer perceptron). $\mathrm{MLP}(\mathrm{f}_{super}) \in \mathbb{R}^{N_k \times 3}$ means that when a statistical type corresponding to the feature of the third cube is different, the coordinates of the third cube may also be different. It should be understood that the example herein is merely for ease of understanding this solution, and is not intended to limit this solution.

For a more intuitive understanding of this solution, refer to FIG. 7. FIG. 7 is a schematic diagram of a plurality of second cubes corresponding to a global attention operator in a to-be-processed point cloud data processing method according to an embodiment of this application. A plurality of target cubes included in to-be-processed point cloud data are established in a three-dimensional coordinate system. Herein, a relationship between a first cube and the second cube is explained only in a manner of a two-dimensional image. All second cubes corresponding to the first cube are represented as $\Omega(xyz)$. As shown in FIG. 7, $\Omega(xyz)$ includes all target cubes corresponding to the to-be-processed data, empty cubes and non-empty cubes exist in all the target cubes corresponding to the to-be-processed data, and B1 represents one third cube, in other words, one third cube includes a plurality of second cubes. It should be understood that the example in FIG. 7 is merely an example ease of understanding the plurality of second cubes corresponding to the second local attention operator, and is not intended to limit this solution.

In this embodiment of this application, a plurality of second cubes corresponding to the first cube include all the target cubes. To be specific, a feature of the first cube is updated by using features of all the target cubes corresponding to the to-be-processed point cloud data, so that a receptive field of a target model is further expanded, thereby further improving a feature obtaining capability of the target model. In addition, the third cube includes the plurality of second cubes, in other words, all the target cubes are divided into a plurality of third cubes. In this way, the feature of the first cube is updated by using features of the plurality of third cubes. This helps improve efficiency of a feature update process.

In another case, the execution device may further update the feature of the first cube based on the feature of the first cube and a self attention mechanism, and by using a self-attention operator in a first feature update module.

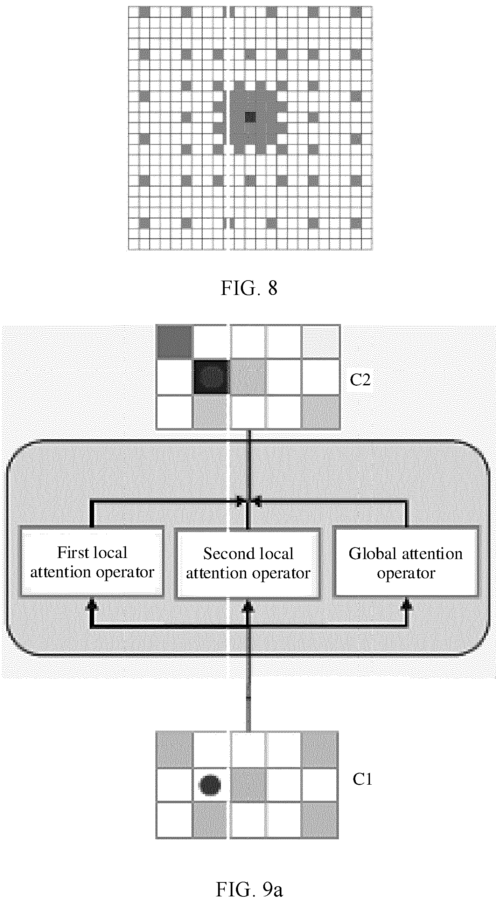

In another case, the execution device may further update the feature of the first cube based on the feature of the first cube and a self attention mechanism, and by separately using a first local attention operator and a second local attention operator in a first feature update module. For a more intuitive understanding of this solution, refer to FIG. 8. FIG. 8 is a schematic diagram of a plurality of second cubes corresponding to a first local attention operator and a second local attention operator in a to-be-processed point cloud data processing method according to an embodiment of this application. FIG. 8 may be understood with reference to the foregoing description of FIG. 6. The plurality of target cubes included in the to-be-processed point cloud data are established in the three-dimensional coordinate system. Herein, the relationship between the first cube and the second cube is explained only in the manner of the two-dimensional image. All the second cubes corresponding to the first cube are represented as $\Omega(xyz)$. As shown in FIG. 8, $\Omega(xyz)$ not only includes all target cubes located around the first cube, as shown in FIG. 5, $\Omega(xyz) = \{(x', y', z')\|x' - x| \leq 2, |y' - y| \leq 2, |z' - z| \leq 2\}$, but further includes performing the sampling operation on the second cube in the manner of gradually expanding the interval. At the innermost layer, sampling is performed at the interval of 1; at the secondary inner layer, sampling is performed at the interval of 2; at the third layer, sampling is performed at the interval of 3; and the rest can be deduced by analogy. It should be understood that the example in FIG. 8 is merely an example for ease of understanding the plurality of second cubes corresponding to the second local attention operator, and is not intended to limit this solution.

In another case, the execution device may further update the feature of the first cube, and the like based on a self attention mechanism and by separately using the first local attention operator, the second local attention operator, and the global attention operator that are in the first feature update module. In other words, the first feature update module may include any one or a combination of the following attention operators: the first local attention operator, the second local attention operator, the global attention operator, a self-attention operator, or another type of attention operator.

Optionally, the first feature update module further includes one or more first neural network layers. After separately obtaining, by using at least one type of attention operator, at least one updated feature map corresponding to the to-be-processed point cloud data, the execution device may process the at least one feature map by using the first neural network layer to obtain an updated feature map that is generated by the entire first feature update module and that corresponds to the to-be-processed point cloud data.

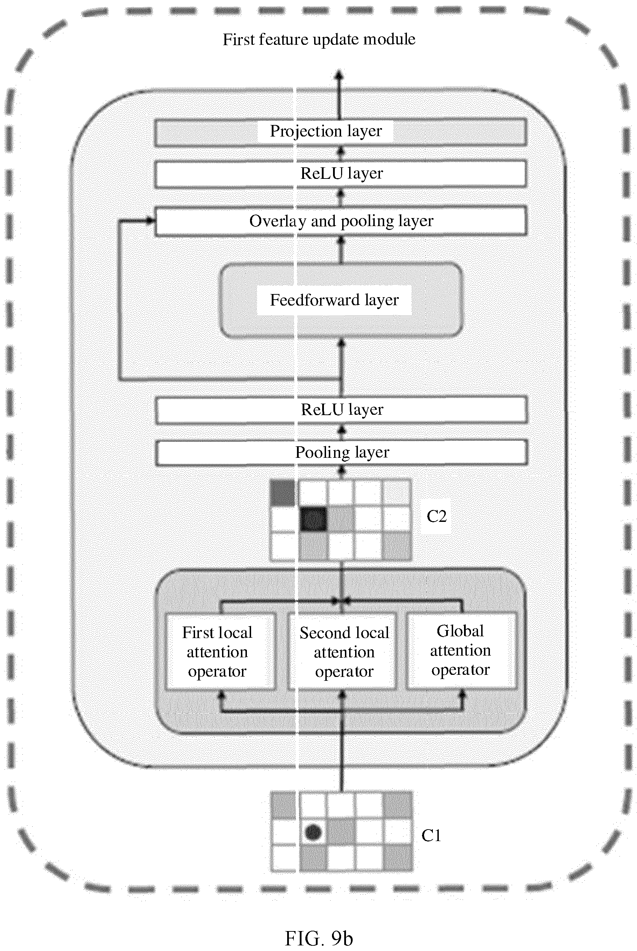

For a more intuitive understanding of this solution, refer to FIG. 9a and FIG. 9b. FIG. 9a and FIG. 9b are two schematic diagrams of a first feature update module in a to-be-processed point cloud data processing method according to an embodiment of this application. Refer to FIG. 9a first. In FIG. 9a, an example in which the first feature update module includes a first local attention operator, a second local attention operator, and a global attention operator is used. As shown in FIG. 9a, after obtaining a feature map corresponding to to-be-processed point cloud data (that is, C1 in the figure), the execution device may separately update a feature of a first cube by using the first local attention operator, the second local attention operator, and the global attention operator that are in the first feature update module, to obtain three updated feature maps (that is, C2 in the figure) corresponding to the to-be-processed point cloud data. It should be understood that the example in FIG. 9a is merely an example for ease of understanding the first feature update module. The first feature update module may include more or fewer neural network layers. The example herein is not intended to limit this solution.

For example, refer to FIG. 9b. FIG. 9b is understood with reference to FIG. 9a. The first feature update module may further include a pooling layer (Batch Normalization Layer), a ReLU layer, a feedforward layer (feedforwad layer), and a projection layer (projection layer). After obtaining the three updated feature maps represented by C2, the execution device may further separately process, by using the foregoing plurality of neural network layers, the three updated feature maps corresponding to the to-be-processed point cloud data to obtain an updated feature map that is generated by the entire first feature update module and that corresponds to the to-be-processed point cloud data. It should be understood that the example in FIG. 9b is merely an example for ease of understanding the first feature update module. In an actual case, the first feature update module may include more or fewer neural network layers, and the first feature update module may also include another type of attention operator. The example herein is not intended to limit this solution.

Further, the global attention operator corresponds to a third cube, and a difference between the first local attention operator and the second local attention operator lies in that a second cube corresponding to the first cube is different. However, after determining a feature of each second cube corresponding to the first cube (or a feature of each third cube corresponding to the first cube), the execution device updates a feature of the first cube based on an attention mechanism.

For a more intuitive understanding of this solution, the following describes a process of updating the feature of the first cube by using formulas. Herein, an example in which the feature of the first cube is $f_{xyz} \in \mathbb{R}^d$ is used. A self-attention operator first performs calculation and linear mapping on the feature to generate a corresponding query (query) feature:

$$query_{xyz} = Linear_{query}(f_{xyz}) \quad (3)$$

$query_{xyz}$ represents the query feature of the first cube, and $Linear_{query}(f_{xyz})$ represents performing linear conversion on the feature of the first cube.

$$key_{x'y'z'} = Linear_{key}(f_{x'y'z'}) + E_{pos} \quad (4)$$

$$E_{pos} = Linear_{pos}(p_{xyz} - p_{x'y'z'}) \quad (5)$$

$key_{x'y'z'}$ represents a key (key) feature of a second cube (or a third cube), $t_{x'y'z'}$ represents a feature of the second cube (or the third cube), $Linear_{key}(f_{x'y'z'})$ represents performing linear conversion on the feature of the second cube (or the feature of the third cube), $p_{xyz}$ represents coordinates of the first cube in a three-dimensional coordinate system, $p_{x'y'z'}$ represents coordinates of the second cube (or the third cube) in the three-dimensional coordinate system, and $Linear_{pos}$ $(p_{xyz} - p_{x'y'z'})$ represents performing linear conversion on $p_{xyz} - p_{x'y'z'}$. Different linear conversion matrices or a same linear conversion matrix may be used for $Linear_{key}$, $Linear_{pos}$, and $Linear_{query}$. This is not limited herein.

$$value_{x'y'z'} = Linear_{value}(f_{x'y'z'}) \quad (6)$$

$value_{x'y'z'}$ represents a value (value) feature of a second cube (or a third cube), $f_{x'y'z'}$ represents a feature of the second cube (or the third cube), and $Linear_{value}(f_{x'y'z'})$ represents performing linear conversion on the feature of the second cube (or the feature of the third cube). Different linear conversion matrices or a same linear conversion matrix may be used for $Linear_{value}$, $Linear_{key}$, $Linear_{pos}$, and $Linear_{query}$. This is not limited herein.

After generating a key feature of each second cube (or third cube) by using the formula (4) and generating a value feature of each second cube (or third cube) by using the formula (6), the execution device may generate an updated feature of the first cube by using the following formula:

$$f_{xyz}^{out} = \sum_{x'y'z' \in \Omega(xyz)} softmax \left( \frac{\left( query_{xyz} \cdot key_{x'y'z'}^{T} \right)}{\sqrt{d_k}} \right) \times value_{x'y'z'} \quad (7)$$

$f_{xyz}^{out}$ represents an updated feature that is generated by using an attention operator (which may be any one of the first local attention operator, the second local attention operator, or the global attention operator) and that is of the first cube. $\Omega$ (xyz) represents a second cube (or a third cube) corresponding to the first cube, $key_{x'y'z'}^{T}$ represents a transpose of $key_{x'y'z'}$, and $d_k$ represents a length of $Linear_{key}(f_{x'y'z'})$. For meanings of other elements in the formula (7), refer to descriptions in the formula (3) to the formula (6). Details are not described herein again.

In this embodiment of this application, only when the first cube is not an empty cube, the feature of the first cube is updated based on the attention mechanism. To be specific, after the first feature update module updates a plurality of target cubes corresponding to the to-be-processed point cloud data, distribution of empty cubes and non-empty cubes in the plurality of target cubes corresponding to the to-be-processed point cloud data does not change, so that features of the plurality of target cubes are updated, and an edge feature of an object is retained.

In another implementation, the target model may include Q second feature update modules, and step 304 may include: When the first cube meets a second preset condition, the execution device updates the feature of the first cube in the plurality of target cubes based on the attention mechanism and by using the second feature update module; and when the first cube does not meet the second preset condition, the execution device continues to process a next first cube.

The second preset condition is that the non-empty cube exists in a cube set, the cube set includes the first cube and at least one second cube corresponding to the first cube, and the at least one second cube is determined from the plurality of target cubes based on the attention mechanism. The at least one second cube is determined from the plurality of target cubes based on the attention mechanism. In other words, the second preset condition is that provided that the non-empty cube exists in the entire cube set, the second feature update module is triggered to update the feature of the current first cube.

Further, similar to the first feature update module, the second feature update module includes any one or more of the following attention operators: a first local attention operator, a second local attention operator, a global attention operator, a self-attention operator, or another type of attention operator. In other words, a difference between the second feature update module and the first feature update module lies only in that a trigger condition of the first feature update module is a first preset condition, and a trigger condition of the second feature update module is a second preset condition. For a specific implementation of "updating the feature of the first cube based on the attention mechanism and by using the second feature update module", refer to the foregoing specific implementation of "updating the feature of the first cube based on the attention mechanism and by using the first feature update module". Details are not described herein again.

Further, for a process in which the execution device determines whether the first cube meets the second preset condition, in an implementation, the execution device may record, by using a hash table, cubes that are in the plurality of target cubes and that are empty cubes, and record, by using the hash table, cubes that are in the plurality of target cubes and that are non-empty cubes. In this case, the execution device may determine, based on index information of the first cube and index information of all second cubes corresponding to the first cube, and by looking up a table (that is, a hash table), whether the first cube meets the second preset condition. For a specific implementation of the foregoing step, refer to the foregoing description. Details are not described one by one herein again.

It should be noted that, to further improve a speed of a table lookup process, in each table lookup process, whether a cube is the empty cube may be determined based on index information of a plurality of second cubes, and complexity of table lookup corresponding to a process in which the execution device updates a feature of one first cube is

$$O(\frac{m}{n} \times time_{index})$$

. m represents a quantity of non-empty cubes in all second cubes corresponding to the first cube, n represents a size of the hash table, and $time_{index}$ represents duration of a subsequent series of indexes. Because duration of one index operation is fixed in a computer, regardless of a quantity of cubes on which the index operation needs to be performed, $time_{index}$ is usually complexity at a constant level. Therefore, a manner of recording the empty cube in the plurality of target cubes by using the hash table can greatly improve efficiency of a process of obtaining a feature of the non-empty cube. In this way, efficiency of a process in which target detection is performed based on the point cloud data is improved.

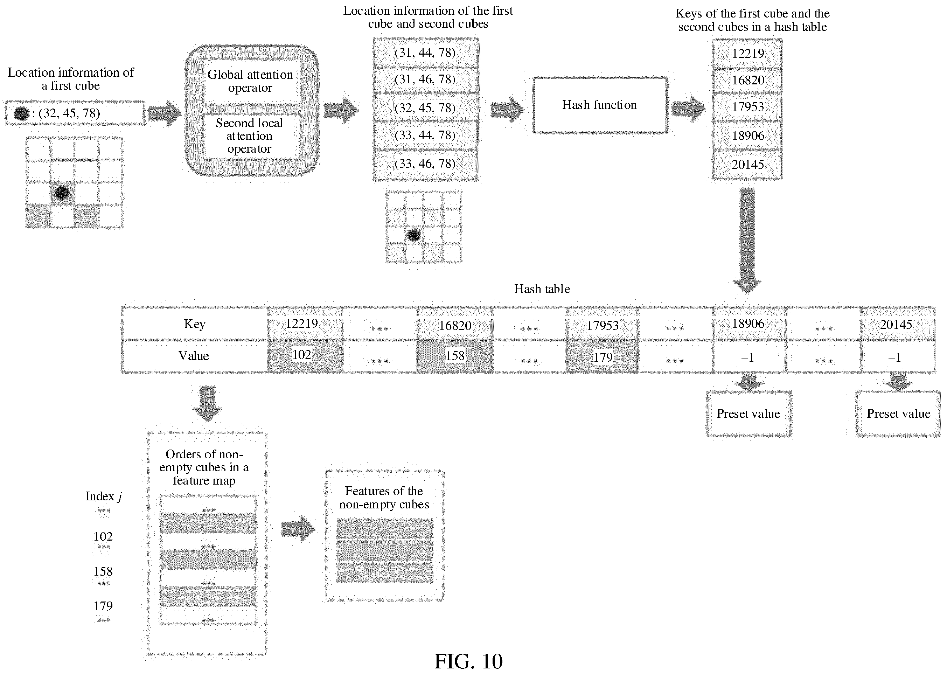

For a more intuitive understanding of this solution, refer to FIG. 10. FIG. 10 is a schematic diagram of determining, by using a hash table, whether a plurality of target cubes are empty cubes in a to-be-processed point cloud data processing method according to an embodiment of this application. In FIG. 10, an example in which index information of the target cube is location information of the target cube is used. As shown in FIG. 10, location information that is of a first cube and that is being processed by an execution device is (32, 45, 78). A plurality of second cubes obtained by using a global attention operator and a second local attention operator include location information of four second cubes (31, 44, 78), (31, 46, 78), (33, 44, 78), and (33, 46, 78).

The execution device obtains five character strings 12219, 16820, 17953, 18906, and 20145 respectively corresponding to the five pieces of location information (31, 44, 78), (31, 46, 78), (32, 45, 78), (33, 44, 78), and (33, 46, 78), and obtains locations of the five character strings 12219, 16820, 17953, 18906, and 20145 in the hash table based on a hash function. It can be learned by looking up the table that there are two second cubes that are empty cubes.

The execution device learns, from the hash table, that sequences of three target cubes (31, 44, 78), (31, 46, 78), and (32, 45, 78) (that is, two second cubes and one first cube) in a feature map are 102, 158, and 179 respectively, and obtains features of the three target cubes from the feature map corresponding to to-be-processed point cloud data. It should be understood that the example in FIG. 10 is merely for ease of understanding this solution, and is not intended to limit this solution.

In this embodiment of this application, only when both the first cube and the plurality of second cubes are empty cubes, the feature of the first cube is not updated by using a second feature update module, so that features of more target cubes are updated. This helps improve a feature obtaining capability of a target model.

In another implementation, the target model may include P first feature update modules and Q second feature update modules. Optionally, a value of P is greater than a value of Q. In this case, step 304 may include: When the first cube meets a first preset condition, the execution device updates the feature of the first cube based on the attention mechanism and by using a first feature update module. When the first cube meets a second preset condition, the execution device updates the feature of the first cube based on the attention mechanism and by using a second feature update module.

In this embodiment of this application, the target model may include the P first feature update modules and the Q second feature update modules, and the value of P is greater than the value of Q. In this way, a feature obtaining capability of the target model is improved while an edge feature of an object is retained as much as possible. This helps improve accuracy of a finally obtained prediction result.

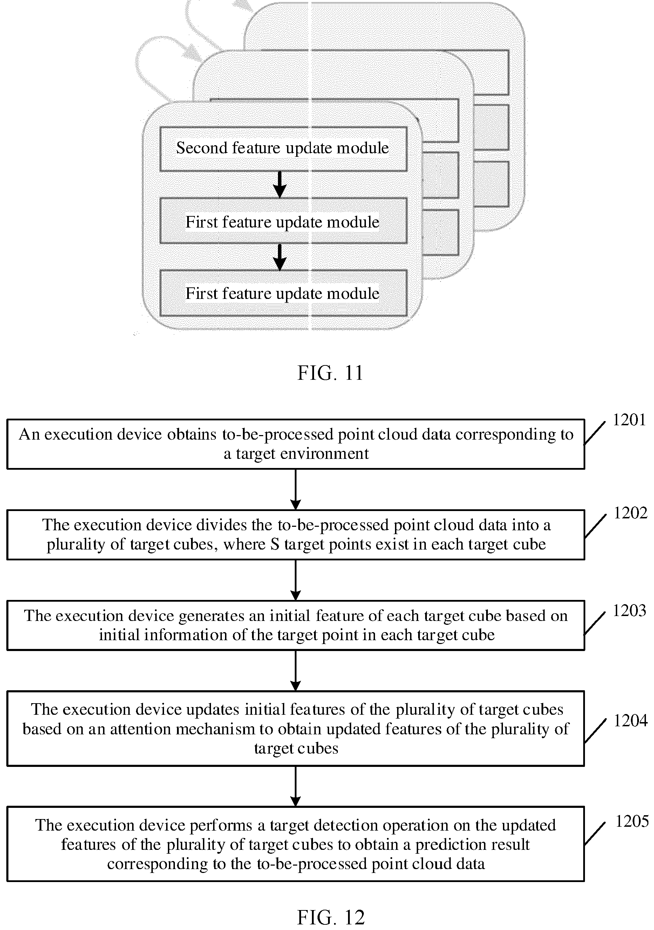

For a more intuitive understanding of this solution, refer to FIG. 11. FIG. 11 is a schematic diagram of feature update modules of a target model in a to-be-processed point cloud data processing method according to an embodiment of this application. As shown in FIG. 11, two first feature update modules and one second feature update module may form one group. In FIG. 11, an example in which the feature update modules of the target model include three groups is used. In other words, an execution device may update, for a plurality of times by using a plurality of first feature update modules and a plurality of second feature update modules in the target model, features of a plurality of target cubes corresponding to to-be-processed point cloud data. It should be understood that the example in FIG. 11 is merely for ease of understanding this solution, and is not intended to limit this solution.

305: The execution device performs a target detection operation on the updated features of the plurality of target cubes to obtain the prediction result corresponding to the to-be-processed point cloud data, where the prediction result indicates a location of at least one object in the surrounding environment of the target vehicle.

In this embodiment of this application, the execution device updates, based on the attention mechanism and by using the target model, the features of the plurality of target cubes corresponding to the to-be-processed point cloud data to obtain the updated features of the plurality of target cubes corresponding to the to-be-processed point cloud data; and performs target detection based on the updated features of the plurality of target cubes corresponding to the to-be-processed point cloud data and by using the target model to obtain the prediction result corresponding to the to-be-processed point cloud data. The prediction result indicates the location of the at least one object in the surrounding environment of the target vehicle.

In this embodiment of this application, the point cloud data corresponding to the surrounding environment of the target vehicle is divided into the plurality of cubes, and the target detection operation is performed based on the features of the plurality of target cubes. In other words, a minimum granularity of a processed object in this application is one cube instead of one target point. This reduces computer resources consumed in a processing process of the entire point cloud data, and helps improve operation efficiency of the target model. After the initial feature of the first cube is generated based on the initial information of the target point in the first cube and by using the target model, the updated feature of the first cube is further generated based on the initial feature of the first cube and the attention mechanism. Further, target detection is performed based on the updated features of the plurality of target cubes to help focus on important information carried in the point cloud data, and improve accuracy of the prediction result.

An embodiment of this application further provides another point cloud data processing method. FIG. 12 is still another schematic flowchart of a point cloud data processing method according to an embodiment of this application. The point cloud data processing method provided in this embodiment of this application may include the following steps.

1201: An execution device obtains to-be-processed point cloud data corresponding to a target environment.

1202: The execution device divides the to-be-processed point cloud data into a plurality of target cubes, where S target points exist in each target cube.

1203: The execution device generates an initial feature of each target cube based on initial information of the target point in each target cube.

1204: The execution device updates initial features of the plurality of target cubes based on an attention mechanism to obtain updated features of the plurality of target cubes.

In this embodiment of this application, for a specific implementation of performing, by the execution device, steps 1202 to 1204, refer to descriptions of specific implementations of steps 302 to 304 in the embodiment corresponding to FIG. 3. Details are not described herein again.

1205: The execution device performs a feature processing operation on the updated features of the plurality of target cubes to obtain a prediction result corresponding to the point cloud data.

In this embodiment of this application, the execution device performs processing based on the updated features of the plurality of target cubes and by using the target model. The prediction result indicates a prediction result corresponding to the to-be-processed point cloud data, and the prediction result represents information about at least one object in the target environment. Further, the prediction result represents location information, category information, or another type of information of at least one object in the target environment. A function of the target model includes any one of the following: target detection, facial recognition, or posture recognition.

When a function of the target model is target detection, step 1205 may include: performing a target detection operation on the updated features of the plurality of target cubes to obtain the prediction result corresponding to the point cloud data, where the prediction result indicates the location information of the at least one object in the target environment. For a specific implementation of step 1205, refer to the descriptions of the specific implementation of step 305 in the embodiment corresponding to FIG. 3. Details are not described herein again. A difference lies in that, first, in the embodiment corresponding to FIG. 3, the execution device may be represented as the vehicle. In the embodiment corresponding to FIG. 12, the execution device may be any one of the following devices: a vehicle, a mobile robot, a data monitoring and processing device, another device configured to process the point cloud data, or the like. This is not exhaustive herein. Second, in the embodiment corresponding to FIG. 3, the to-be-processed point cloud data is point cloud data corresponding to the surrounding environment of the vehicle. In the embodiment corresponding to FIG. 12, the to-be-processed point cloud data may be any one of the following: point cloud data corresponding to a surrounding environment of the vehicle, point cloud data corresponding to a surrounding environment of the mobile robot, point cloud data collected through monitoring, or point cloud data of another type. Third, in the embodiment corresponding to FIG. 3, the prediction result indicates the location of the at least one object in the surrounding environment of the vehicle. In the embodiment corresponding to FIG. 12, the prediction result indicates any one piece of the following information: a location of at least one object in the surrounding environment of the vehicle, a location of at least one object in the surrounding environment of the mobile robot, an environment of at least one object in a monitoring environment, or the like. This is not exhaustive herein.

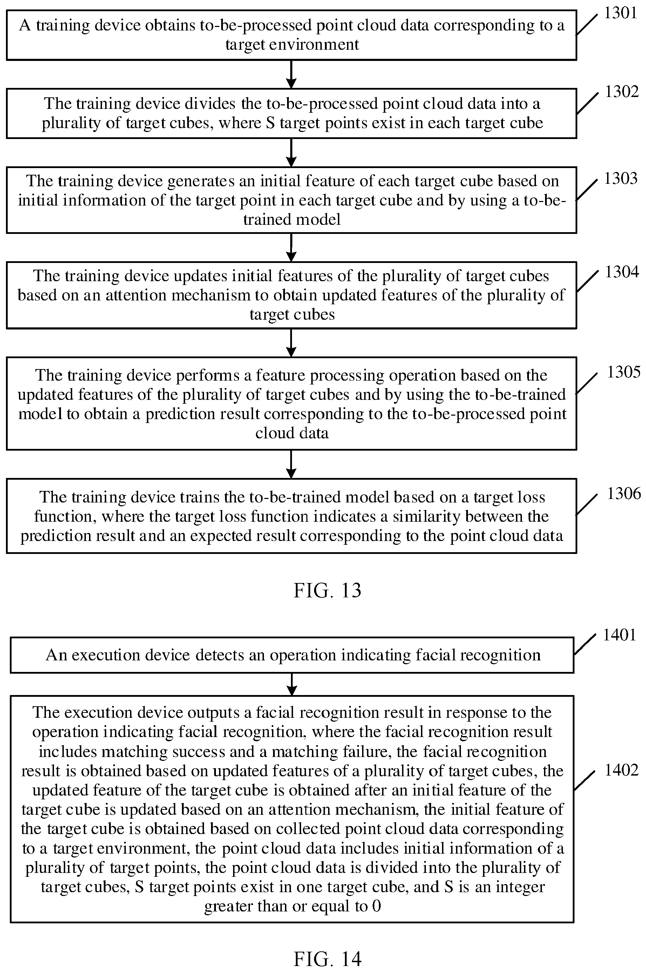

When a function of the target model is facial recognition, step 1205 may include: performing a facial recognition operation on the updated features of the plurality of target cubes to obtain the prediction result corresponding to the point cloud data, where the prediction result represents the category information of the at least one object in the target environment, and the category information of the at least one object in the target environment indicates that face matching succeeds or face matching fails. The execution device configured with the target model may be any one of the following devices: a terminal device, an intelligent lock, and a data monitoring and processing device. The prediction result corresponding to the to-be-processed point cloud data indicates that the matching succeeds or the matching fails. A specific implementation of step 1205 is described in detail in a subsequent embodiment corresponding to FIG. 14. Details are not described herein again.

When a function of the target model is posture recognition, step 1205 may include: performing a posture recognition operation on the updated features of the plurality of target cubes to obtain the prediction result corresponding to the point cloud data, where the information about the at least one object in the target environment includes a body feature of at least one human body in the target environment and/or a gait feature of the at least one human body in the target environment during walking. The prediction result corresponding to the to-be-processed point cloud data indicates a posture feature corresponding to the human body. Posture features may include a body feature and/or a gait feature during walking. For a meaning of the posture feature, refer to the foregoing description. Details are not described herein again.

In this embodiment of this application, a plurality of application scenarios of this solution are provided. This improves implementation flexibility of this solution.

2. Training phase

In this embodiment of this application, the training phase describes a process in which the training device 220 generates a mature neural network by using the image dataset in the database 230. Specifically, FIG. 13 is a schematic flowchart of a neural network training method according to an embodiment of this application. The neural network training method provided in this embodiment of this application may include the following steps.

1301: A training device obtains to-be-processed point cloud data corresponding to a target environment.

1302: The training device divides the to-be-processed point cloud data into a plurality of target cubes, where S target points exist in each target cube.

1303: The training device generates an initial feature of each target cube based on initial information of the target point in each target cube and by using a to-be-trained model.

1304: The training device updates initial features of the plurality of target cubes based on an attention mechanism to obtain updated features of the plurality of target cubes.

1305: The training device performs a feature processing operation based on the updated features of the plurality of target cubes and by using the to-be-trained model to obtain a prediction result corresponding to the to-be-processed point cloud data.

In this embodiment of this application, for a specific implementation of performing, by the training device, steps 1301 to 1305, refer to descriptions of specific implementations of steps 301 to 305 in the embodiment corresponding to FIG. 12. Details are not described herein again.

1306: The training device trains the to-be-trained model according to a target loss function, where the target loss function indicates a similarity between the prediction result and an expected result corresponding to the point cloud data.

In this embodiment of this application, training data is preconfigured on the training device, and the training data includes the expected result corresponding to the to-be-processed point cloud data. After obtaining the prediction result corresponding to the to-be-processed point cloud data, the training device may calculate a function value of the target loss function based on the prediction result corresponding to the to-be-processed point cloud data and the expected result corresponding to the to-be-processed point cloud data, and update a parameter value of the to-be-trained model based on the function value of the target loss function and a backpropagation algorithm, to complete training of the to-be-trained model for one time.

The "to-be-trained model" may also be understood as a "to-be-trained target model". A meaning represented by "the expected result corresponding to the to-be-processed point cloud data" is similar to a meaning of "the prediction result corresponding to the to-be-processed point cloud data". A difference lies in that "the prediction result corresponding to the to-be-processed point cloud data" is a prediction result generated by the to-be-trained model, and the "expected result corresponding to the to-be-processed point cloud data" is a correct result corresponding to the to-be-processed point cloud data. For example, when the to-be-processed model is used to execute a target detection task, the prediction result indicates an expected location of the at least one object in the target environment, and the expected result indicates an expected location (which may also be referred to as a correct location) of the at least one object in the target environment. It should be understood that the example herein is merely for ease of understanding this solution, and is not used to exhaustively list meanings of expected results in various application scenarios.

The training device may repeatedly perform steps 1301 to 1306 for a plurality of times to iteratively train the to-be-trained model until a preset condition is met, to obtain the trained to-be-trained model. The preset condition may be that a convergence condition of the target loss function is met; or that a quantity of iteration times in steps 1301 to 1306 reaches a preset quantity.

In this embodiment of this application, not only a specific implementation of a model inference process is provided, but also a specific implementation of a model training process is provided, thereby expanding application scenarios of this solution.

An embodiment of this application further provides a point cloud data processing method. FIG. 14 is a schematic flowchart of a point cloud data processing method according to an embodiment of this application. The point cloud data processing method provided in this embodiment of this application may include the following steps.

1401: An execution device detects an operation indicating facial recognition.

In this embodiment of this application, the execution device may detect the operation indicating facial recognition. Specifically, in an application scenario, if the execution device is a terminal device such as a mobile phone or a tablet computer, when the execution device detects any one of the following operations: an operation of unlocking a screen, a payment operation, an operation of opening encrypted data, or another operation that requires identity recognition, it is considered that the operation indicating facial recognition is detected. This is not exhaustive herein.

In another application scenario, if the execution device is an intelligent lock, when the execution device detects a door opening operation input by the user, it may be considered that the operation indicating facial recognition is detected.

In another application scenario, if the execution device is a data monitoring and processing device, when the execution device detects a face matching operation input by the user, it may be considered that the operation indicating facial recognition is detected.

In this embodiment of this application, a plurality of application scenarios in which the facial recognition operation is detected are provided. This improves implementation flexibility of this solution.

1402: The execution device outputs a facial recognition result in response to the operation indicating facial recognition, where the facial recognition result includes matching success and a matching failure, the facial recognition result is obtained based on updated features of a plurality of target cubes, the updated feature of the target cube is obtained after an initial feature of the target cube is updated based on an attention mechanism, the initial feature of the target cube is obtained based on collected point cloud data corresponding to a target environment, the point cloud data includes initial information of a plurality of target points, the point cloud data is divided into the plurality of target cubes, S target points exist in one target cube, and S is an integer greater than or equal to 0.

In this embodiment of this application, in response to the operation indicating facial recognition, the execution device may trigger to obtain the point cloud data corresponding to the target environment. The point cloud data includes the initial information of the plurality of target points, the point cloud data is divided into the plurality of target cubes, the S target points exist in the target cube, and S is an integer greater than or equal to 0.

Further, in response to the operation indicating facial recognition, the execution device may trigger to collect point cloud data corresponding to a surrounding environment. Alternatively, the execution device prestores the point cloud data that is collected by using a monitoring device and that corresponds to the target environment, and in response to the operation indicating facial recognition, the execution device may trigger to obtain the point cloud data corresponding to the target environment.

The execution device generates an initial feature of the first cube based on the initial information of the target point in the first cube and by using a target model, and updates the feature of the first cube based on the initial feature of the first cube and the attention mechanism, and by using the target model, to obtain an updated feature of the first cube. The first cube is one of the plurality of target cubes. It should be noted that for a specific implementation in which the execution device obtains the updated feature of the first cube based on the obtained point cloud data, refer to the descriptions in the embodiment corresponding to FIG. 3. Details are not described herein again.

The execution device performs the facial recognition operation based on the updated features of the plurality of target cubes and by using the target model, and outputs a facial recognition result. The facial recognition result includes the matching success and the matching failure.

Specifically, the execution device may prestore a facial feature of at least one user, and the execution device may perform matching on the facial feature of each user based on the updated features of the plurality of target cubes to obtain the facial recognition result. The facial recognition result includes the matching success and the matching failure.

Specifically, for example, if the facial recognition operation is triggered based on the operation of unlocking a screen, when the facial recognition result is the matching success, the execution device may display an interface after the screen is unlocked, or may display how to enter an interface after the screen is unlocked, or the like. When the facial recognition result is the matching failure, the execution device may display an unlock failure interface.

For example, if the facial recognition operation is triggered based on the payment operation, when the facial recognition result is the matching success, the execution device may trigger to execute the payment operation. When the facial recognition result is the matching failure, the execution device may stop making payment.

For example, if the facial recognition operation is triggered based on the operation of opening encrypted data, when the facial recognition result is the matching success, the execution device may trigger to display the encrypted data. When the facial recognition result is the matching failure, the execution device may display an interface of "Fail to open encrypted data".

For example, if the facial recognition operation is triggered based on the door opening operation, when the facial recognition result is the matching success, the execution device may trigger to open a door. When the facial recognition result is the matching failure, the execution device may not open the door, and generate an alarm sound.

For example, if the facial recognition operation is triggered based on the face matching operation, when the face recognition result is the matching success, the execution device may display personal information of a matched person. When the facial recognition result is the matching failure, the execution device may notify the user of the matching failure through a text box, a voice, or in another manner.

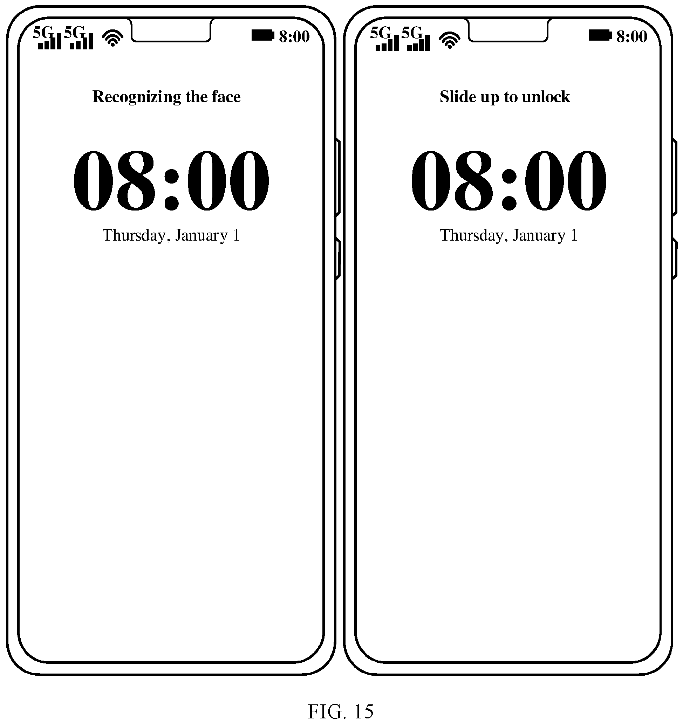

For a more intuitive understanding of this solution, refer to FIG. 15. FIG. 15 is a schematic diagram of detecting an operation indicating facial recognition in a point cloud data processing method according to an embodiment of this application. FIG. 15 includes two sub-schematic diagrams: a left sub-schematic diagram and a right sub-schematic diagram. In FIG. 15, an application scenario of screen unlocking is used as an example. As shown in the left schematic diagram of FIG. 15, an execution device is performing facial recognition. If a result of the facial recognition is matching success, entering the right schematic diagram of FIG. 15 is triggered, in other words, how to enter an interface after a screen is unlocked is displayed. It should be understood that the example in FIG. 15 is merely for ease of understanding this solution, and is not intended to limit this solution.

For a more intuitive understanding of beneficial effect brought by embodiments of this application, the following provides description with reference to specific experimental data. Herein, an experiment is performed by using a KITTI dataset and a Waymo dataset, and the KITTI dataset includes about 13000 frame point cloud scenarios. About 3500 frame point cloud scenarios are selected as a training dataset, about 3500 frame point cloud scenarios are selected as a verification dataset, and remaining 7000 frame point cloud scenarios are selected as a test dataset. For the Waymo dataset, 20% of data in the Waymo dataset is randomly selected as the training dataset, and the entire Waymo dataset is used as the verification dataset.

In the experiment, mAP is used as an index to measure performance of 3D target detection. When the KITTI dataset is used, a model in embodiments of this application improves detection performance by 4% compared with a Second model, and the model in this embodiment of this application improves detection performance by 2% compared with a PV-RCNN model.

When the Waymo dataset is used, a model in embodiments of this application improves detection performance by 1% compared with the Second model, and the model in this embodiment of this application improves detection performance by 3% compared with the PV-RCNN model. In addition, a quantity of parameters and an inference speed are tested in the experiment. For experimental data, refer to the following tables.

**Table 1**

| Model | Inference speed (frames per second) |
|---|---|
| Second | 20.73 |
| Model in embodiments of this application | 13.65 |

In Table 1, an example in which the experiment is performed by using the KITTI dataset is used. As shown in Table 1, data processing efficiency can be further improved by using the target model provided in embodiments of this application.

**Table 2**

| Model | Quantity of parameters |
|---|---|
| Second | 5.3 M |
| Model in embodiments of this application | 4.8 M |

As shown in Table 2, the quantity of parameters of the target model provided in embodiments of this application is smaller.

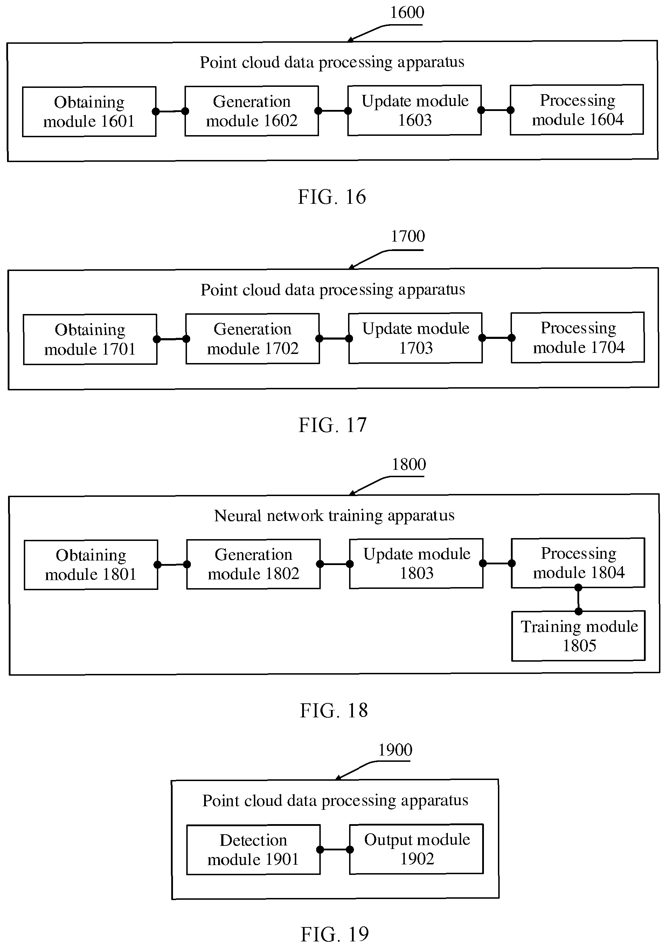

According to embodiments corresponding to FIG. 1 to FIG. 13, to better implement the solutions in embodiments of this application, the following further provides related devices configured to implement the foregoing solutions. FIG. 16 is a schematic diagram of a structure of a point cloud data processing apparatus according to an embodiment of this application. The point cloud data processing apparatus 1600 may include: an obtaining module 1601, configured to obtain point cloud data corresponding to a target environment, where the point cloud data includes initial information of a plurality of target points, the point cloud data is divided into a plurality of target cubes, S target points exist in each target cube, and S is an integer greater than or equal to 0; a generation module 1602, configured to generate an initial feature of each target cube based on the initial information of the target point in each target cube; an update module 1603, configured to update initial features of the plurality of target cubes based on an attention mechanism to obtain updated features of the plurality of target cubes; and a processing module 1604, configured to perform a feature processing operation on the updated features of the plurality of target cubes to obtain a prediction result corresponding to the point cloud data, where the prediction result represents information about at least one object in the target environment.

In a possible design, the update module 1603 is specifically configured to: when a first cube meets a first preset condition, update the feature of each first cube in the plurality of target cubes based on the attention mechanism. The first cube is any one of the plurality of target cubes, the first preset condition is a non-empty cube, and a feature of the non-empty cube is not preset information.

In a possible design, the apparatus is applied to an execution device, and the execution device records the non-empty cube in the plurality of target cubes by using a hash table.

In a possible design, the update module 1603 is further configured to: when the first cube meets a second preset condition, update the feature of each first cube in the plurality of target cubes based on the attention mechanism. The second preset condition is that the non-empty cube exists in a cube set, the cube set includes the first cube and at least one second cube corresponding to the first cube, and the at least one second cube is determined from the plurality of target cubes based on the attention mechanism.

In a possible design, the at least one second cube includes all target cubes in a preset range around the first cube, and a distance between the second cube in the preset range around the first cube and the first cube is less than or equal to a preset distance threshold; and/or the at least one second cube is obtained by sampling the plurality of target cubes by using the first cube as a sampling center.

In a possible design, the update module 1603 is further configured to: generate features of a plurality of third cubes based on a feature of the second cube, where one third cube includes a plurality of second cubes; and update the feature of each first cube in the plurality of target cubes based on the feature of each third cube and a global attention mechanism, where the global attention mechanism is one of attention mechanisms.

In a possible design, the point cloud data corresponding to the target environment includes point cloud data corresponding to a surrounding environment of a target vehicle. The processing module 1604 is specifically configured to perform a target detection operation on the updated feature of the target cube to obtain the prediction result corresponding to the point cloud data, where the prediction result indicates a location of at least one object in the surrounding environment of the target vehicle.

In a possible design, the processing module 1604 is specifically configured to: perform a target detection operation based on the updated features of the plurality of target cubes to obtain the prediction result corresponding to the point cloud data, where the information about the at least one object in the target environment includes location information of the at least one object in the target environment; perform a facial recognition operation based on the updated features of the plurality of target cubes to obtain the prediction result corresponding to the point cloud data, where the information about the at least one object in the target environment includes category information of the at least one object in the target environment, and the category information of the at least one object in the target environment indicates that face matching succeeds or face matching fails; or perform a posture recognition operation based on the updated features of the plurality of target cubes to obtain the prediction result corresponding to the point cloud data, where the information about the at least one object in the target environment includes a body feature of at least one human body in the target environment and/or a gait feature of the at least one human body in the target environment during walking.

It should be noted that content such as information exchange and an execution process between the modules/units in the point cloud data processing apparatus 1600 is based on a same concept as the method embodiments corresponding to FIG. 12 in this application. For specific content, refer to the descriptions in the foregoing method embodiments of this application. Details are not described herein again.

An embodiment of this application further provides a point cloud data processing apparatus. FIG. 17 is a schematic diagram of a structure of a point cloud data processing apparatus according to an embodiment of this application. The point cloud data processing apparatus 1700 may include: an obtaining module 1701, configured to obtain point cloud data corresponding to a surrounding environment of a target vehicle, where the point cloud data includes initial information of a plurality of target points, the point cloud data is divided into a plurality of target cubes, S target points exist in each target cube, and S is an integer greater than or equal to 0; a generation module 1702, configured to generate an initial feature of each target cube based on the initial information of the target point in each target cube; an update module 1703, configured to update initial features of the plurality of target cubes based on an attention mechanism to obtain updated features of the plurality of target cubes; and a processing module 1704, configured to perform a feature processing operation on the updated features of the plurality of target cubes to obtain a prediction result corresponding to the point cloud data, where the prediction result indicates a location of at least one object in the surrounding environment of the target vehicle.

In a possible design, the update module 1703 is specifically configured to: when a first cube meets a first preset condition, update the feature of each first cube in the plurality of target cubes based on the attention mechanism. The first cube is any one of the plurality of target cubes, the first preset condition is a non-empty cube, and a feature of the non-empty cube is not preset information.

In a possible design, the update module 1703 is further configured to: when the first cube meets a second preset condition, update the feature of each first cube in the plurality of target cubes based on the attention mechanism. The second preset condition is that the non-empty cube exists in a cube set, the cube set includes the first cube and at least one second cube corresponding to the first cube, and the at least one second cube is determined from the plurality of target cubes based on the attention mechanism.

It should be noted that content such as information exchange and an execution process between the modules/units in the point cloud data processing apparatus 1700 is based on a same concept as the method embodiments corresponding to FIG. 2b to FIG. 11 in this application. For specific content, refer to the descriptions in the foregoing method embodiments of this application. Details are not described herein again.

An embodiment of this application further provides a neural network training apparatus. FIG. 18 is a schematic diagram of a structure of a neural network training apparatus according to an embodiment of this application. The neural network training apparatus 1800 may include: an obtaining module 1801, configured to obtain point cloud data corresponding to a target environment, where the point cloud data includes initial information of a plurality of target points, the point cloud data is divided into a plurality of target cubes, S target points exist in each target cube, and S is an integer greater than or equal to 0; a generation module 1802, configured to generate an initial feature of each target cube based on the initial information of the target point in each target cube; an update module 1803, configured to update the initial feature of each target cube in initial features of the plurality of target cubes based on an attention mechanism to obtain updated features of the plurality of target cubes; a processing module 1804, configured to perform a feature processing operation on the updated features of the plurality of target cubes to obtain a prediction result corresponding to the point cloud data; and a training module 1805, configured to train a target model according to a target loss function, where the target loss function indicates a similarity between the prediction result and an expected result corresponding to the point cloud data.

In a possible design, the update module 1803 is specifically configured to: when a first cube meets a first preset condition, update the feature of each first cube in the plurality of target cubes based on the attention mechanism. The first cube is any one of the plurality of target cubes, the first preset condition is a non-empty cube, and a feature of the non-empty cube is not preset information.

In a possible design, the update module 1803 is further configured to: when the first cube meets a second preset condition, update the feature of each first cube in the plurality of target cubes based on the attention mechanism. The second preset condition is that the non-empty cube exists in a cube set, the cube set includes the first cube and at least one second cube corresponding to the first cube, and the at least one second cube is determined from the plurality of target cubes based on the attention mechanism.

It should be noted that content such as information exchange and an execution process between the modules/units in the neural network training apparatus 1800 is based on a same concept as the method embodiment corresponding to FIG. 13 in this application. For specific content, refer to the descriptions in the foregoing method embodiments of this application. Details are not described herein again.

An embodiment of this application further provides another point cloud data processing apparatus. FIG. 19 is a schematic diagram of another structure of a point cloud data processing apparatus according to an embodiment of this application. The point cloud data processing apparatus 1900 may include: a detection module 1901, configured to detect an operation indicating facial recognition; and an output module 1902, configured to output a facial recognition result in response to the operation indicating facial recognition. The facial recognition result includes matching success and a matching failure, the facial recognition result is obtained based on updated features of a plurality of target cubes, the updated feature of the target cube is obtained after an initial feature of the target cube is updated based on an attention mechanism, the initial feature of the target cube is obtained based on collected point cloud data corresponding to a target environment, the point cloud data includes initial information of a plurality of target points, the point cloud data is divided into the plurality of target cubes, S target points exist in one target cube, and S is an integer greater than or equal to 0.

In a possible design, when the detection module 1901 detects any one of the following operations: an operation of unlocking a screen, a payment operation, or an operation of opening encrypted data; detects a door opening operation input by a user; or detects a face matching operation input by the user, it is considered that the operation indicating facial recognition is detected.

It should be noted that content such as information exchange and an execution process between the modules/units in the point cloud data processing apparatus 1900 is based on a same concept as the method embodiments corresponding to FIG. 14 in this application. For specific content, refer to the descriptions in the foregoing method embodiments of this application. Details are not described herein again.

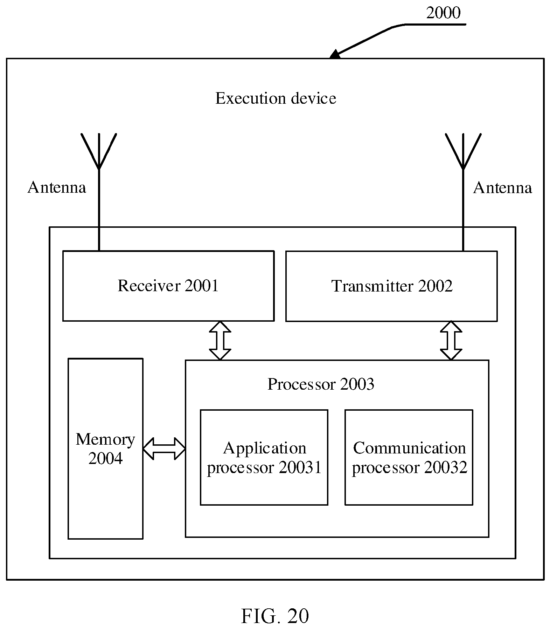

The following describes an execution device according to embodiment of this application. FIG. 20 is a schematic diagram of a structure of an execution device according to an embodiment of this application. The execution device 2000 may be specifically represented as a vehicle, a mobile robot, a data monitoring and processing device, another device, or the like. This is not limited herein. Specifically, the execution device 2000 includes a receiver 2001, a transmitter 2002, a processor 2003, and a memory 2004 (there may be one or more processors 2003 in the execution device 2000, and one processor is used as an example in FIG. 20). The processor 2003 may include an application processor 20031 and a communication processor 20032. In some embodiments of this application, the receiver 2001, the transmitter 2002, the processor 2003, and the memory 2004 may be connected through a bus or in another manner.

The memory 2004 may include a read-only memory and a random access memory, and provide instructions and data for the processor 2003. A part of the memory 2004 may further include a non-volatile random access memory (non-volatile random access memory, NVRAM). The memory 2004 stores a processor and operation instructions, an executable module or a data structure, a subnet thereof, or an extended set thereof. The operation instructions may include various operation instructions to implement various operations.

The processor 2003 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 2003, or may be implemented by the processor 2003. The processor 2003 may be an integrated circuit chip, and has a signal processing capability. In an implementation process, the steps in the foregoing methods may be implemented by using a hardware integrated logical circuit in the processor 2003, or by using instructions in a form of software. The processor 2003 may be a general-purpose processor, a digital signal processor (digital signal processor, DSP), a microprocessor or a microcontroller, and may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 2003 may implement or perform the methods, steps, and logic block diagrams disclosed in embodiments of this application. The general-purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, a register, or the like. The storage medium is located in the memory 2004, and the processor 2003 reads information in the memory 2004 and completes the steps in the foregoing methods in combination with hardware in the processor 2003.

The receiver 2001 may be configured to: receive input digital or character information, and generate a signal input related to a related setting and function control of the execution device. The transmitter 2002 may be configured to output digital or character information through a first interface. The transmitter 2002 may be further configured to send instructions to a disk group through the first interface to modify data in the disk group. The transmitter 2002 may further include a display device such as a display.

In this embodiment of this application, in one case, the application processor 20031 in the processor 2003 is configured to perform the point cloud data processing method performed by the execution device in embodiments corresponding to FIG. 2b to FIG. 11. It should be noted that a specific manner in which the application processor 20031 performs the foregoing steps is based on a same concept as the method embodiments corresponding to FIG. 2b to FIG. 11 in this application. Technical effect brought by the specific manner is the same as technical effect in the method embodiments corresponding to FIG. 2b to FIG. 11 in this application. For specific content, refer to the descriptions in the foregoing method embodiments of this application. Details are not described herein again.

In another case, the application processor 20031 in the processor 2003 is configured to perform the point cloud data processing method performed by the execution device in the embodiment corresponding to FIG. 12. It should be noted that a specific manner in which the application processor 20031 performs the foregoing steps is based on a same concept as the method embodiments corresponding to FIG. 12 in this application. Technical effect brought by the specific manner is the same as technical effect in the method embodiments corresponding to FIG. 12 in this application. For specific content, refer to the descriptions in the foregoing method embodiments of this application. Details are not described herein again.

In another case, the application processor 20031 in the processor 2003 is configured to perform the point cloud data processing method performed by the execution device in the embodiment corresponding to FIG. 12. It should be noted that a specific manner in which the application processor 20031 performs the foregoing steps is based on a same concept as the method embodiments corresponding to FIG. 14 in this application. Technical effect brought by the specific manner is the same as technical effect in the method embodiments corresponding to FIG. 14 in this application. For specific content, refer to the descriptions in the foregoing method embodiments of this application. Details are not described herein again.

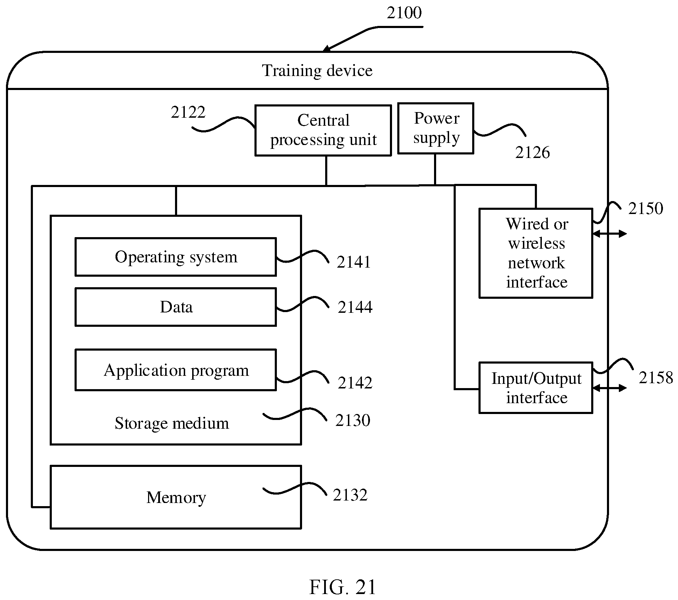

An embodiment of this application further provides a training device. FIG. 21 is a schematic diagram of a structure of a training device according to an embodiment of this application. Specifically, the training device 2100 is implemented by one or more servers. The training device 2100 may have a large difference due to different configurations or performance, and may include one or more central processing units (central processing units, CPU) 2122 (for example, one or more processors), a memory 2132, and one or more storage media 2130 (for example, one or more massive storage devices) that store an application program 2142 or data 2144. The memory 2132 and the storage medium 2130 may be transient storage or persistent storage. A program stored in the storage medium 2130 may include one or more modules (not shown in the figure), and each module may include a series of instruction operations for the training device. Further, the central processing unit 2122 may be configured to: communicate with the storage medium 2130, and perform, on the training device 2100, the series of instruction operations in the storage medium 2130.

The training device 2100 may further include one or more power supplies 2126, one or more wired or wireless network interfaces 2150, one or more input/output interfaces 2158, and/or one or more operating systems 2141 such as Windows ServerTM, Mac OS XTM, UnixTM, LinuxTM and FreeBSDTM.

In this embodiment of this application, the central processing unit 2122 is configured to perform the point cloud data processing method performed by the training device in the embodiment corresponding to FIG. 13. It should be noted that a specific manner in which the central processing unit 2122 performs the foregoing steps is based on a same concept as the method embodiments corresponding to FIG. 13 in this application. Technical effect brought by the specific manner is the same as technical effect in the method embodiments corresponding to FIG. 13 in this application. For specific content, refer to the descriptions in the foregoing method embodiments of this application. Details are not described herein again.

An embodiment of this application further provides a product including a computer program. When the product is run on a computer, the computer is enabled to perform steps performed by the execution device in the methods described in embodiments shown in FIG. 2b to FIG. 11; the computer is enabled to perform steps performed by the execution device in the method described in the embodiment shown in FIG. 12; the computer is enabled to perform steps performed by the training device in the method described in the embodiment shown in FIG. 13; or the computer is enabled to perform steps performed by the execution device in the method described in the embodiment shown in FIG. 14 or FIG. 15.

An embodiment of this application further provides a computer-readable storage medium. The computer-readable storage medium stores a program used to perform signal processing. When the program runs on a computer, the computer is enabled to perform steps performed by the execution device in the methods described in embodiments shown in FIG. 2b to FIG. 11; the computer is enabled to perform steps performed by the execution device in the method described in the embodiment shown in FIG. 12; the computer is enabled to perform steps performed by the training device in the method described in the embodiment shown in FIG. 13; or the computer is enabled to perform steps performed by the execution device in the method described in the embodiment shown in FIG. 14 or FIG. 15.

The point cloud data processing apparatus, the neural network training apparatus, the execution device, and the training device provided in embodiments of this application may specifically be chips. The chip includes a processing unit and a communication unit. The processing unit may be, for example, a processor, and the communication unit may be, for example, an input/output interface, a pin, or a circuit. The processing unit may execute computer-executable instructions stored in a storage unit. The chip is enabled to perform the point cloud data processing method described in embodiments shown in FIG. 2b to FIG. 11; the chip is enabled to perform the point cloud data processing method described in the embodiment shown in FIG. 12; the chip is enabled to perform the neural network training method described in the embodiment shown in FIG. 13; or the chip is enabled to perform the point cloud data processing method described in the embodiment shown in FIG. 14 or FIG. 15. Optionally, the storage unit is a storage unit in the chip, for example, a register or a cache; or the storage unit may be a storage unit that is in a radio access device and that is located outside the chip, for example, a read-only memory (read-only memory, ROM), another type of static storage device that can store static information and instructions, or a random access memory (random access memory, RAM).

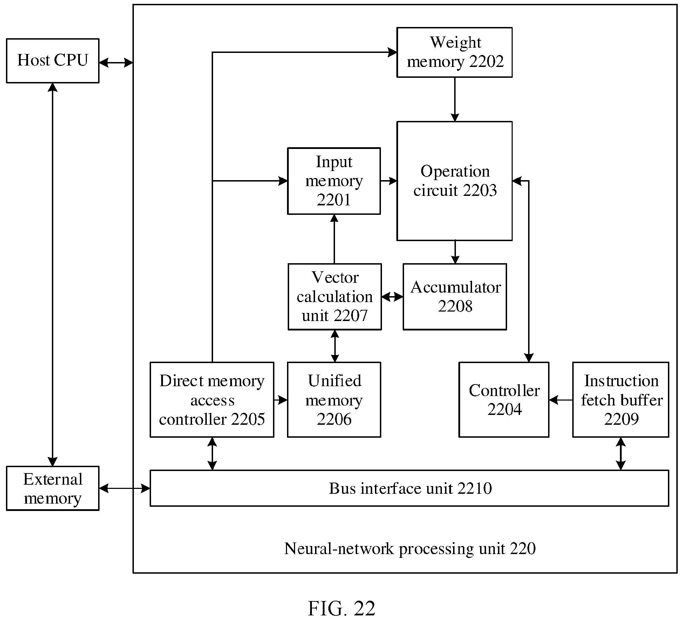

Specifically, FIG. 22 is a schematic diagram of a structure of a chip according to an embodiment of this application. The chip may be represented as a neural-network processing unit NPU 220. The NPU 220 is mounted to a host CPU (host CPU) as a coprocessor, and the host CPU allocates a task. A core part of the NPU is an operation circuit 2203, and a controller 2204 controls the operation circuit 2203 to extract matrix data in a memory and perform a multiplication operation.

In some implementations, the operation circuit 2203 includes a plurality of process engines (process engine, PE) inside. In some implementations, the operation circuit 2203 is a two-dimensional systolic array. The operation circuit 2203 may alternatively be a one-dimensional systolic array or another electronic circuit capable of performing mathematical operations such as multiplication and addition. In some implementations, the operation circuit 2203 is a general-purpose matrix processor.

For example, it is assumed that there is an input matrix A, a weight matrix B, and an output matrix C. The operation circuit fetches data corresponding to the matrix B from a weight memory 2202, and buffers the data on each PE in the operation circuit. The operation circuit fetches data of the matrix A from an input memory 2201, to perform a matrix operation on the matrix B, and stores an obtained partial result or an obtained final result of the matrix into an accumulator (accumulator) 2208.

A unified memory 2206 is configured to store input data and output data. Weight data is directly transferred to the weight memory 2202 by using a direct memory access controller (direct memory access controller, DMAC) 2205. The input

**EP 4 414 862 B1**

data is also transferred to the unified memory 2206 by using the DMAC.

A BIU is a bus interface unit, namely, a bus interface unit 2210, and is used for interaction between an AXI bus and the DMAC and between the AXI bus and an instruction fetch buffer (instruction fetch buffer, IFB) 2209.

The bus interface unit (bus interface unit, BIU for short) 2210 is configured to obtain instructions from an external memory by the instruction fetch buffer 2209, and is further configured to obtain original data of the input matrix A or the weight matrix B from the external memory by the direct memory access controller 2205.

The DMAC is mainly configured to: transfer input data in the external memory DDR to the unified memory 2206, transfer weight data to the weight memory 2202, or transfer input data to the input memory 2201.

A vector calculation unit 2207 includes a plurality of operation processing units. If required, further processing is performed on an output of the operation circuit, for example, vector multiplication, vector addition, an exponential operation, a logarithmic operation, or value comparison. The vector calculation unit 2207 is mainly configured to perform network calculation at a non-convolutional/fully connected layer in a neural network, for example, batch normalization (batch normalization), pixel-level summation, and upsampling on a feature plane.

In some implementations, the vector calculation unit 2207 can save a processed output vector to the unified memory 2206. For example, the vector calculation unit 2207 may apply a linear function or a non-linear function to the output of the operation circuit 2203, for example, perform linear interpolation on a feature plane extracted at a convolutional layer. For another example, the linear function or the non-linear function is applied to a vector of an accumulated value to generate an activation value. In some implementations, the vector calculation unit 2207 generates a normalized value, a pixel-level summation value, or both. In some implementations, the processed output vector can be used as an activation input to the operation circuit 2203, for example, to be used at a subsequent layer in the neural network.

The instruction fetch buffer (instruction fetch buffer) 2209 connected to the controller 2204 is configured to store instructions used by the controller 2204.

The unified memory 2206, the input memory 2201, the weight memory 2202, and the instruction fetch buffer 2209 are all on-chip memories. The external memory is private for an NPU hardware architecture.

Operations at layers in the target model shown in FIG. 2b to FIG. 15 may be performed by the operation circuit 2203 or the vector calculation unit 2207.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all the modules may be selected based on an actual requirement to achieve the objectives of the solutions of embodiments. In addition, in the accompanying drawings of the apparatus embodiments provided in this application, connection relationships between the modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function performed by a computer program can be easily implemented by using corresponding hardware, and a specific hardware structure used to achieve a same function may be of various forms, for example, in a form of an analog circuit, a digital circuit, a dedicated circuit, or the like. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

**Claims**

1. A computer-implemented point cloud data processing method, wherein the method comprises:

   obtaining (A1) point cloud data corresponding to a target environment, wherein the point cloud data comprises initial information of a plurality of target points, the point cloud data is divided into a plurality of target cubes, S target points exist in each target cube, and S is an integer greater than or equal to 0, and wherein the point cloud data are point cloud data collected by using one sensor or point cloud data obtained after fusion processing is performed on point cloud data collected by a plurality of sensors;
   generating (A2) an initial feature of each target cube based on the initial information of the target point in each target cube;
   updating (A3) initial features of the plurality of target cubes based on an attention mechanism to obtain updated features of the plurality of target cubes; and
   performing (A4) a feature processing operation on the updated features of the plurality of target cubes to obtain a prediction result corresponding to the point cloud data, wherein the prediction result represents information about at least one object in the target environment;
   wherein the updating (A3) initial features of the plurality of target cubes based on an attention mechanism comprises:

      when a first cube meets a first preset condition, updating the feature of each first cube in the plurality of target cubes based on the attention mechanism, wherein the first cube is any one of the plurality of target cubes, the first preset condition is that the first cube is a non-empty cube, and a feature of the non-empty cube is not preset information;
      wherein the updating (A3) initial features of the plurality of target cubes based on an attention mechanism further comprises:

         when the first cube meets a second preset condition, updating the feature of each first cube in the plurality of target cubes based on the attention mechanism, wherein
         the second preset condition is that the non-empty cube exists in a cube set, the cube set comprises the first cube and at least one second cube corresponding to the first cube, and the at least one second cube is determined from the plurality of target cubes based on the attention mechanism; and
         wherein the updating the feature of each first cube in the plurality of target cubes based on the attention mechanism further comprises:

            generating features of a plurality of third cubes based on a feature of the second cube, wherein one third cube comprises a plurality of second cubes; and
            updating the feature of each first cube in the plurality of target cubes based on the feature of each third cube and a global attention mechanism, wherein the global attention mechanism is one of attention mechanisms.

2. The method according to claim 1, wherein the feature of the third cube are statistical values of features of the plurality of second cubes included in the third cube, and the statistical values specifically include any one or more of the following statistical features: a maximum value, a minimum value, a mean value, and a variance.

3. The method according to claim 2, wherein coordinates of the third cube are coordinates of one of the plurality of second cubes included in the third cube, and coordinates of a second cube to be selected as the coordinates of the third cube are determined based on a type of statistical feature used for the feature of the third cube.

4. The method according to any one of claims 1 to 3, wherein the method is applied to an execution device, and the execution device records the non-empty cube in the plurality of target cubes by using a hash table.

5. The method according to any one of claims 1 to 3, wherein the initial feature of each target cube is generated (1303) based on the initial information of the target point in each target cube and by using a to-be-trained model, wherein the feature processing operation is performed (1305) based on the updated features of the plurality of target cubes and by using the to-be-trained model to obtain the prediction result corresponding to the point cloud data; and

wherein the method further comprises:

training (1306) the to-be-trained model according to a further target loss function, wherein the further target loss function indicates a similarity between the prediction result and an expected result corresponding to the point cloud data.

6. The method according to any one of claims 1 to 3, wherein the method further comprises:

detecting (1401) an operation indicating facial recognition; and
outputting (1402) a facial recognition result in response to the operation indicating facial recognition, wherein the facial recognition result comprises matching success and a matching failure, the facial recognition result is obtained based on the updated features of the plurality of target cubes; and
wherein the detecting (1401) an operation indicating facial recognition comprises:

considering that the operation indicating facial recognition is detected when detecting any one of the following operations: an operation of unlocking a screen, a payment operation, or an operation of opening encrypted data;
detecting a door opening operation input by the user; or
detecting a face matching operation input by the user.

7. A computer program product, wherein when the computer program runs on a computer, the computer is enabled to perform the method according to any one of claims 1 to 6.

8. A computer-readable storage medium, comprising a program, wherein when the program runs on a computer, the computer is enabled to perform the method according to any one of claims 1 to 6.

9. An execution device (2000), comprising a processor (2003) and a memory (2004), wherein the processor (2003) is coupled to the memory (2004);

the memory (2004) is configured to store a program; and
the processor (2003) is configured to execute the program in the memory (2004), to enable the execution device (2000) to perform the method according to any one of claims 1 to 6.


**Patentansprüche**

1. Computerimplementiertes Punktwolkendatenverarbeitungsverfahren, wobei das Verfahren Folgendes umfasst:

Erlangen (A1) von Punktwolkendaten, die einer Zielumgebung entsprechen, wobei die Punktwolkendaten Anfangsinformationen einer Vielzahl von Zielpunkten umfassen, die Punktwolkendaten in eine Vielzahl von Zielwürfeln unterteilt sind, S Zielpunkte in jedem Zielwürfel vorhanden sind und S eine Ganzzahl größer oder gleich 0 ist, und wobei die Punktwolkendaten Punktwolkendaten sind, die unter Verwendung eines Sensors erfasst werden, oder Punktwolkendaten sind, die erlangt werden nachdem eine Fusionsverarbeitung an Punktwolkendaten, die durch eine Vielzahl von Sensoren erfasst werden, durchgeführt wird;
Erzeugen (A2) eines Anfangsmerkmals jedes Zielwürfels basierend auf den Anfangsinformationen des Zielpunkts in jedem Zielwürfel; Aktualisieren (A3) von Anfangsmerkmalen der Vielzahl von Zielwürfeln basierend auf einem Aufmerksamkeitsmechanismus, um aktualisierte Merkmale der Vielzahl von Zielwürfeln zu erlangen; und
Durchführen (A4) einer Merkmalsverarbeitungsoperation an den aktualisierten Merkmalen der Vielzahl von Zielwürfeln, um ein den Punktwolkendaten entsprechendes Vorhersageergebnis zu erlangen, wobei das Vorhersageergebnis Informationen über mindestens ein Objekt in der Zielumgebung darstellt;
wobei das Aktualisieren (A3) von Anfangsmerkmalen der Vielzahl von Zielwürfeln basierend auf einem Aufmerksamkeitsmechanismus Folgendes umfasst:

wenn ein erster Würfel eine erste voreingestellte Bedingung erfüllt, Aktualisieren des Merkmals jedes ersten Würfels in der Vielzahl von Zielwürfeln basierend auf dem Aufmerksamkeitsmechanismus, wobei der erste Würfel ein beliebiger aus der Vielzahl von Zielwürfeln ist, die erste voreingestellte Bedingung darin besteht, dass der erste Würfel ein nicht leerer Würfel ist, und ein Merkmal des nicht leeren Würfels nicht voreingestellte Informationen sind;

wobei das Aktualisieren (A3) von Anfangsmerkmalen der Vielzahl von Zielwürfeln basierend auf einem Aufmerksamkeitsmechanismus ferner Folgendes umfasst:

wenn der erste Würfel eine zweite voreingestellte Bedingung erfüllt, Aktualisieren des Merkmals jedes ersten Würfels in der Vielzahl von Zielwürfeln basierend auf dem Aufmerksamkeitsmechanismus, wobei die zweite voreingestellte Bedingung darin besteht, dass der nicht leere Würfel in einem Würfelsatz vorhanden ist, der Würfelsatz den ersten Würfel und mindestens einen zweiten, dem ersten Würfel entsprechenden Würfel umfasst und der mindestens eine zweite Würfel aus der Vielzahl von Zielwürfeln basierend auf dem Aufmerksamkeitsmechanismus bestimmt wird; und
wobei das Aktualisieren des Merkmals jedes ersten Würfels in der Vielzahl von Zielwürfeln basierend auf dem Aufmerksamkeitsmechanismus ferner Folgendes umfasst:

Erzeugen von Merkmalen einer Vielzahl von dritten Würfeln basierend auf einem Merkmal des zweiten Würfels, wobei ein dritter Würfel eine Vielzahl von zweiten Würfeln umfasst; und
Aktualisieren des Merkmals jedes ersten Würfels in der Vielzahl von Zielwürfeln basierend auf dem Merkmal jedes dritten Würfels und einem globalen Aufmerksamkeitsmechanismus, wobei der globale Aufmerksamkeitsmechanismus einer von Aufmerksamkeitsmechanismen ist.

2. Verfahren nach Anspruch 1, wobei es sich bei dem Merkmal des dritten Würfels um statistische Werte von Merkmalen der in dem dritten Würfel beinhalteten Vielzahl von zweiten Würfeln handelt und die statistischen Werte insbesondere eines oder mehrere der folgenden statistischen Merkmale beinhalten: einen Maximalwert, einen Minimalwert, einen Mittelwert und eine Varianz.

3. Verfahren nach Anspruch 2, wobei Koordinaten des dritten Würfels Koordinaten eines der in dem dritten Würfel beinhalteten Vielzahl von zweiten Würfeln sind und Koordinaten eines zweiten Würfels, die als die Koordinaten des dritten Würfels auszuwählen sind, basierend auf einem Typ eines statistischen Merkmals bestimmt werden, der für das Merkmal des dritten Würfels verwendet wird.

4. Verfahren nach einem der Ansprüche 1 bis 3, wobei das Verfahren auf eine Ausführungsvorrichtung angewendet wird und die Ausführungsvorrichtung den nicht leeren Würfel in der Vielzahl von Zielwürfeln unter Verwendung einer Hashtabelle aufzeichnet.

5. Verfahren nach einem der Ansprüche 1 bis 3, wobei das Anfangsmerkmal jedes Zielwürfels basierend auf den Anfangsinformationen des Zielpunkts in jedem Zielwürfel und unter Verwendung eines zu trainierenden Modells erzeugt wird (1303), wobei die Merkmalsverarbeitungsoperation basierend auf den aktualisierten Merkmalen der Vielzahl von Zielwürfeln und unter Verwendung des zu trainierenden Modells durchgeführt wird (1305), um das den Punktwolkendaten entsprechende Vorhersageergebnis zu erlangen; und
wobei das Verfahren ferner Folgendes umfasst:
Trainieren (1306) des zu trainierenden Modells gemäß einer weiteren Zielverlustfunktion, wobei die weitere Zielverlustfunktion eine Ähnlichkeit zwischen dem Vorhersageergebnis und einem erwarteten Ergebnis, das den Punktwolkendaten entspricht, angibt.

6. Verfahren nach einem der Ansprüche 1 bis 3, wobei das Verfahren ferner Folgendes umfasst:

Erkennen (1401) einer Operation, die eine Gesichtserkennung angibt; und
Ausgeben (1402) eines Gesichtserkennungsergebnisses als Reaktion auf die Operation, die eine Gesichtserkennung angibt,
wobei
das Ergebnis der Gesichtserkennung einen erfolgreichen und einen fehlgeschlagenen Abgleich umfasst, das Ergebnis der Gesichtserkennung basierend auf den aktualisierten Merkmalen der Vielzahl von Zielwürfeln erlangt wird; und
wobei das Erkennen (1401) einer Operation, die eine Gesichtserkennung angibt, Folgendes umfasst:

Beurteilen, dass die Operation, die eine Gesichtserkennung angibt, erkannt wird, wenn eine der folgenden Operationen erkannt wird: eine Operation von Entsperren eines Bildschirms, eine Zahlungsoperation oder eine Operation von Öffnen verschlüsselter Daten;

Erkennen einer durch den Benutzer eingegebenen Türöffnungsoperation; oder

Erkennen einer durch den Benutzer eingegebenen Gesichtserkennungsoperation.

**7.** Computerprogrammprodukt, wobei, wenn das Computerprogramm auf einem Computer läuft, der Computer in die Lage versetzt wird, das Verfahren nach einem der Ansprüche 1 bis 6 durchzuführen.

**8.** Computerlesbares Speichermedium, umfassend ein Programm, wobei, wenn das Programm auf einem Computer läuft, der Computer in die Lage versetzt wird, das Verfahren nach einem der Ansprüche 1 bis 6 durchzuführen.

**9.** Ausführungsvorrichtung (2000), umfassend einen Prozessor (2003) und einen Speicher (2004), wobei der Prozessor (2003) mit dem Speicher (2004) verbunden ist;

der Speicher (2004) dazu konfiguriert ist, ein Programm zu speichern; und

der Prozessor (2003) dazu konfiguriert ist, das Programm in dem Speicher (2004) auszuführen, um der Ausführungsvorrichtung (2000) zu ermöglichen, das Verfahren nach einem der Ansprüche 1 bis 6 durchzuführen.

## Revendications

**1.** Procédé de traitement de données de nuage en points mis en œuvre par ordinateur, dans lequel le procédé comprend :

l'obtention (A1) de données de nuage en points correspondant à un environnement cible, dans lequel les données de nuage en points comprennent des informations initiales d'une pluralité de points cibles, les données de nuage en points sont divisées en une pluralité de cubes cibles, S points cibles existent dans chaque cube cible, et S est un entier supérieur ou égal à 0, et dans lequel les données de nuage en points sont des données de nuage en points collectées à l'aide d'un capteur ou de données de nuage en points obtenues après qu'un traitement de fusion est réalisé sur des données de nuage en points collectées par une pluralité de capteurs ;

la génération (A2) d'une caractéristique initiale de chaque cube cible basée sur les informations initiales du point cible dans chaque cube cible ;

la mise à jour (A3) de caractéristiques initiales de la pluralité de cubes cibles sur la base d'un mécanisme d'attention pour obtenir des caractéristiques mises à jour de la pluralité de cubes cibles ; et

la réalisation (A4) d'une opération de traitement de caractéristiques sur les caractéristiques mises à jour de la pluralité de cubes cibles pour obtenir un résultat de prédiction correspondant aux données de nuage en points, dans lequel le résultat de prédiction représente des informations sur au moins un objet dans l'environnement cible ;

dans lequel la mise à jour (A3) de caractéristiques initiales de la pluralité de cubes cibles basée sur un mécanisme d'attention comprend :

lorsqu'un premier cube satisfait à une première condition prédéfinie, la mise à jour de la caractéristique de chaque premier cube dans la pluralité de cubes cibles sur la base du mécanisme d'attention, dans lequel le premier cube est l'un quelconque des cubes cibles, la première condition prédéfinie est que le premier cube est un cube non vide, et une caractéristique du cube non vide n'est pas une information prédéfinie ;

dans lequel la mise à jour (A3) de caractéristiques initiales de la pluralité de cubes cibles basée sur un mécanisme d'attention comprend également :

lorsque le premier cube satisfait à une seconde condition prédéfinie, la mise à jour de la caractéristique de chaque premier cube dans la pluralité de cubes cibles sur la base du mécanisme d'attention, dans lequel

la seconde condition prédéfinie est que le cube non vide existe dans un ensemble de cubes, l'ensemble de cubes comprend le premier cube et au moins un deuxième cube correspondant au premier cube, et l'au moins un deuxième cube est déterminé à partir de la pluralité de cubes cibles sur la base du mécanisme d'attention ; et

dans lequel la mise à jour de la caractéristique de chaque premier cube dans la pluralité de cubes cibles basée sur le mécanisme d'attention comprend également :

la génération de caractéristiques d'une pluralité de troisièmes cubes sur la base d'une caractéristique du deuxième cube, dans lequel un troisième cube comprend une pluralité de deuxièmes cubes ; et

la mise à jour de la caractéristique de chaque premier cube dans la pluralité de cubes cibles sur la base de la caractéristique de chaque troisième cube et d'un mécanisme d'attention global, dans lequel le mécanisme d'attention global est l'un des mécanismes d'attention.

2. Procédé selon la revendication 1, dans lequel les caractéristiques du troisième cube sont des valeurs statistiques de caractéristiques de la pluralité de deuxièmes cubes inclus dans le troisième cube, et les valeurs statistiques comportent spécifiquement l'une ou plusieurs des caractéristiques statistiques suivantes : une valeur maximale, une valeur minimale, une valeur moyenne, et une variance.

3. Procédé selon la revendication 2, dans lequel les coordonnées du troisième cube sont des coordonnées de l'un de la pluralité de deuxièmes cubes inclus dans le troisième cube, et les coordonnées d'un deuxième cube à sélectionner comme coordonnées du troisième cube sont déterminées sur la base d'un type de caractéristique statistique utilisé pour la caractéristique du troisième cube.

4. Procédé selon l'une quelconque des revendications 1 à 3, dans lequel le procédé est appliqué à un dispositif d'exécution, et le dispositif d'exécution enregistre le cube non vide dans la pluralité de cubes cibles à l'aide d'une table de hachage.

5. Procédé selon l'une quelconque des revendications 1 à 3, dans lequel la caractéristique initiale de chaque cube cible est générée (1303) sur la base des informations initiales du point cible dans chaque cube cible et à l'aide d'un modèle à entraîner, dans lequel l'opération de traitement de caractéristiques est réalisée (1305) sur la base des caractéristiques mises à jour de la pluralité de cubes cibles et à l'aide du modèle à entraîner pour obtenir le résultat de prédiction correspondant aux données de nuage en points ; et

dans lequel le procédé comprend également :

l'entraînement (1306) du modèle à entraîner selon une fonction de perte cible supplémentaire, dans lequel la fonction de perte cible supplémentaire indique une similarité entre le résultat de la prédiction et un résultat attendu correspondant aux données de nuage en points.

6. Procédé selon l'une quelconque des revendications 1 à 3, dans lequel le procédé comprend également :

la détection (1401) d'une opération indiquant une reconnaissance faciale ; et
la production (1402) d'un résultat de reconnaissance faciale en réponse à l'opération indiquant la reconnaissance faciale, dans lequel
le résultat de la reconnaissance faciale comprend une correspondance réussie et un échec de correspondance,
le résultat de la reconnaissance faciale est obtenu sur la base des caractéristiques mises à jour de la pluralité de cubes cibles ; et
dans lequel la détection (1401) d'une opération indiquant la reconnaissance faciale comprend :

la considération que l'opération indiquant la reconnaissance faciale est détectée lors de la détection de l'une quelconque des opérations suivantes : une opération de déverrouillage d'écran, une opération de paiement, ou une opération d'ouverture de données chiffrées ;
la détection d'une opération d'ouverture de porte entrée par l'utilisateur ; ou
la détection d'une opération de correspondance faciale entrée par l'utilisateur.

7. Produit de programme informatique, dans lequel lorsque le produit de programme informatique est exécuté sur un ordinateur, l'ordinateur est activé pour réaliser le procédé selon l'une quelconque des revendications 1 à 6.

8. Support de stockage lisible par ordinateur, comprenant un programme, dans lequel lorsque le programme est exécuté sur un ordinateur, l'ordinateur est activé pour réaliser le procédé selon l'une quelconque des revendications 1 à 6.

9. Dispositif d'exécution (2000), comprenant un processeur (2003) et une mémoire (2004), dans lequel le processeur (2003) est couplé à la mémoire (2004) ;

la mémoire (2004) est configurée pour stocker un programme ; et le processeur (2003) est configuré pour exécuter le programme dans la mémoire (2004), pour permettre au dispositif d'exécution (2000) de réaliser le procédé selon l'une quelconque des revendications 1 à 6.

Intelligent information chain

**Intelligent product and industry application**

| Translation/ Text analysis/... | Voice/Visual/Image/... |

Data

Data processing: | Data training/Machine learning/ Deep learning | Search/Inference/ Decision-making | ... |

Infrastructure | Sensor | Intelligent chip | Base platform | ... |

IT value chain

FIG. 1a

FIG. 1b

FIG. 2a

An execution device obtains point cloud data corresponding to a target environment, where the point cloud data includes initial information of a plurality of target points, the point cloud data is divided into a plurality of target cubes, S target points exist in each target cube, and S is an integer greater than or equal to 0 — A1

The execution device generates an initial feature of each target cube based on initial information of the target point in each target cube — A2

The execution device updates initial features of the plurality of target cubes based on an attention mechanism to obtain updated features of the plurality of target cubes — A3

The execution device performs a feature processing operation on the updated features of the plurality of target cubes to obtain a prediction result corresponding to the point cloud data — A4

FIG. 2b

Point cloud data

Initial features of a plurality of target cubes

Feature update

Feature processing

Prediction result

Target model

FIG. 2c

An execution device obtains to-be-processed point cloud data corresponding to a surrounding environment of a target vehicle /301

The execution device divides the to-be-processed point cloud data into a plurality of target cubes, where S target points exist in each target cube /302

The execution device generates an initial feature of each target cube based on initial information of the target point in each target cube /303

The execution device updates initial features of the plurality of target cubes based on an attention mechanism to obtain updated features of the plurality of target cubes /304

The execution device performs a target detection operation on the updated features of the plurality of target cubes to obtain a prediction result corresponding to the to-be-processed point cloud data, where the prediction result indicates a location of at least one object in the surrounding environment of the target vehicle /305

FIG. 3

FIG. 4

FIG. 5

FIG. 6

FIG. 7

FIG. 8

FIG. 9a

FIG. 9b

Location information of the first
cube and second cubes

Keys of the first cube and the
second cubes in a hash table

Location information of
a first cube

● : (32, 45, 78)

Global attention
operator

Second local
attention
operator

(31, 44, 78)

(31, 46, 78)

(32, 45, 78)

(33, 44, 78)

(33, 46, 78)

Hash function

12219

16820

17953

18906

20145

Hash table

| Key | 12219 | *** | 16820 | *** | 17953 | *** | 18906 | *** | 20145 |
|---|---|---|---|---|---|---|---|---|---|
| Value | 102 | *** | 158 | *** | 179 | *** | −1 | *** | −1 |

Preset value

Preset value

Orders of non-
empty cubes in a
feature map

Index *j*

***

102

***

158

***

179

***

***

***

***

***

Features of the
non-empty cubes

FIG. 10

Second feature update module

↓

First feature update module

↓

First feature update module

FIG. 11

An execution device obtains to-be-processed point cloud data corresponding to a target environment — 1201

↓

The execution device divides the to-be-processed point cloud data into a plurality of target cubes, where S target points exist in each target cube — 1202

↓

The execution device generates an initial feature of each target cube based on initial information of the target point in each target cube — 1203

↓

The execution device updates initial features of the plurality of target cubes based on an attention mechanism to obtain updated features of the plurality of target cubes — 1204

↓

The execution device performs a target detection operation on the updated features of the plurality of target cubes to obtain a prediction result corresponding to the to-be-processed point cloud data — 1205

FIG. 12

A training device obtains to-be-processed point cloud data corresponding to a target environment — 1301

The training device divides the to-be-processed point cloud data into a plurality of target cubes, where S target points exist in each target cube — 1302

The training device generates an initial feature of each target cube based on initial information of the target point in each target cube and by using a to-be-trained model — 1303

The training device updates initial features of the plurality of target cubes based on an attention mechanism to obtain updated features of the plurality of target cubes — 1304

The training device performs a feature processing operation based on the updated features of the plurality of target cubes and by using the to-be-trained model to obtain a prediction result corresponding to the to-be-processed point cloud data — 1305

The training device trains the to-be-trained model based on a target loss function, where the target loss function indicates a similarity between the prediction result and an expected result corresponding to the point cloud data — 1306

FIG. 13

An execution device detects an operation indicating facial recognition — 1401

The execution device outputs a facial recognition result in response to the operation indicating facial recognition, where the facial recognition result includes matching success and a matching failure, the facial recognition result is obtained based on updated features of a plurality of target cubes, the updated feature of the target cube is obtained after an initial feature of the target cube is updated based on an attention mechanism, the initial feature of the target cube is obtained based on collected point cloud data corresponding to a target environment, the point cloud data includes initial information of a plurality of target points, the point cloud data is divided into the plurality of target cubes, S target points exist in one target cube, and S is an integer greater than or equal to 0 — 1402

FIG. 14

5G 5G 📶 🔋 8:00

**Recognizing the face**

# 08:00

Thursday, January 1

5G 5G 📶 🔋 8:00

**Slide up to unlock**

# 08:00

Thursday, January 1

FIG. 15

1600

FIG. 16

1700

FIG. 17

1800

FIG. 18

1900

FIG. 19

FIG. 20

FIG. 21

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10970518 B1
- US 2019156206 A1
- US 2021278852 A1
- WO 2021051539 A1

**Non-patent literature cited in the description**

- SA-Det3D: Self-Attention Based Context-Aware 3D Object Detection. **PRARTHANA BHATTACHAR-YYA et al.** ARXIV.ORG. OLIN LIBRARY CORNELL UNIVERSITY ITHACA, 07 January 2021
- VoxelNet: End-to-End Learning for Point Cloud Based 3D Object Detection. **YIN ZHOU et al.** ARXIV.ORG. OLIN LIBRARY CORNELL UNIVERSITY ITHACA, 17 November 2017
- **YAN YAN et al.** SECOND: Sparsely Embedded Convolutional Detection. *Sensors*, 06 October 2018, vol. 18 (10), 3337